Europäisches Patentamt

**European Patent Office** (11) Numéro de publication: **0 024 961**

Office européen des brevets **B1**

(19)

(12) **FASCICULE DE BREVET EUROPEEN**

(45) Date de publication du fascicule du brevet: (51) Int. Cl.³: **G 01 V 3/02**, G 01 V 3/38
21.09.83

(21) Numéro de dépôt: **80401028.8**

(22) Date de dépôt: **08.07.80**

(54) **Procédé de prospection géophysique à courants transitoires.**

(30) Priorité: **09.07.79 FR 7917766** (73) Titulaire: **COMPAGNIE GENERALE DE GEOPHYSIQUE,**
**13.02.80 FR 8003159** **6, rue Galvani, F-91301 Massy (FR)**

(43) Date de publication de la demande: (72) Inventeur: **Rocroi, Jean-Pierre, Camille, 9, rue Pasteur,**
**11.03.81 Bulletin 81/10** **F-91300 Massy (FR)**
Inventeur: **Gole, François, Victor, 9, rue A. Guilmant,**
**F-92190 Meudon (FR)**

(45) Mention de la délivrance du brevet:
**21.09.83 Bulletin 83/38**

(74) Mandataire: **Corre, Jacques Denis Paul et al, Cabinet**
**Regimbeau 26, Avenue Kléber, F-75116 Paris (FR)**

(84) Etats contractants désignés:
**AT BE CH DE GB IT LI NL SE**

(56) Documents cités:
**FR-A-2 010 981**
**US-A-1 997 163**
**US-A-3 382 428**
**US-A-3 795 861**
**US-A-3 984 759**

**IEEE TRANSACTIONS ON GEOSCIENCE ELEC-**
**TRONICS, vol. GE 21, no. 4, (10–1974) New York, US**
**E.A. QUINCY et al. «New transient induction system**
**employing pseudo noise signals», pages 123–127**

ACTORUM AG

Procédé de prospection géophysique à courants transitoires

L'invention concerne une technique particulière de prospection géophysique, dite «à courants transitoires».

Selon cette technique, on dispose tout d'abord en coopération avec le sous-sol un dipôle émetteur ainsi qu'un dipôle récepteur sensible au champ électromagnétique. On applique ensuite répétitivement au dipôle émetteur un courant d'excitation impulsionnel de manière à définir des impulsions de polarité alternée, suivies chacune par du courant nul; en même temps, on détecte répétitivement le signal transitoire qui en résulte à la sortie du dipôle récepteur. Un traitement ultérieur des signaux transitoires détectés successifs permet d'obtenir une représentation figurative du phénomène transitoire qui en facilite l'interprétation par le géophysicien. L'analyse par l'homme est en effet seule possible dans cette technique, car on ne dispose pas à l'heure actuelle d'une théorie ni d'une modélisation qui permette l'exploitation directe des signaux détectés.

Dans ce domaine, certaines propositions partent d'une hypothèse, qui expliquerait le phénomène transitoire observé.

Ainsi, le brevet américain US-A-3 984 759 part de l'une des hypothèses, connues sous le nom de «polarisation provoquée» (induced polarization). A partir de là, ce document enseigne de mesurer sur le terrain le déphasage entre le signal émis et le signal reçu.

Dans le cadre analogue d'une hypothèse de «polarisation provoquée», le document FR-A-2 010 981 est seulement venu décrire généralement la mesure du champ magnétique provoqué, en tenant compte du champ magnétique terrestre ambiant.

D'un autre côté, le document IEEE TRANSACTIONS ON GEOSCIENCE ELECTRONICS vol. GE 21, no 4, 10–1974 (Quincy et al.) propose un procédé de prospection électromagnétique où la forme d'onde d'excitation est pseudo-aléatoire; des techniques de corrélation permettent alors de comparer le signal reçu au signal émis. Là encore, une liaison émetteur-récepteur est nécessaire.

Aucune de ces propositions n'a véritablement donné satisfaction d'une manière générale.

Une particularité des courants transitoires est qu'ils sont d'amplitude très faible, et fréquemment perturbés par des bruits d'origines diverses (bruits industriels et telluriques, notamment). Cette présence de bruit fait que le géophysicien se trouve souvent confronté à de sérieuses difficultés d'interprétation des données et documents qui lui sont soumis après traitement.

La présente invention a pour but principal d'améliorer cette situation, en particulier en réduisant le niveau de bruit.

Elle propose à cet effet un procédé du type précité, ainsi modifié: on définit des intervalles de temps respectivement consécutifs aux impulsions d'excitation et contemporains du courant nul d'excitation, ces intervalles de temps étant de durée prédéterminée, choisie pour couvrir sensiblement toute la partie utile du phénomène transitoire; on détecte à chaque fois le signal transitoire en fonction du temps au moins pendant ces intervalles de temps, avec échantillonnage, numérisation, et enregistrement temporellement repéré du signal détecté; et l'opération de traitement commence par un prétraitement, qui comporte au moins l'élaboration d'une représentation numérique brute du phénomène transitoire en fonction du temps, évaluée statistiquement à partir des éléments de l'enregistrement numérique qui se correspondent temporellement dans les intervalles de temps successifs, et de préférence ensuite un filtrage numérique lissant qui fournit une représentation numérique lissée du phénomène transitoire, débarrassée d'une partie substantielle des bruits ambiants.

Selon un aspect préférentiel de l'invention, le signal d'émission est répété un grand nombre de fois – plusieurs centaines de fois –; on préfère aussi, actuellement, enregistrer continuellement sous forme numérique aussi bien le courant d'excitation que le signal détecté, même pendant les impulsions; la durée prédéterminée des intervalles de temps de détection est choisie comprise entre 1 seconde et 20 secondes, environ, suivant les caractéristiques du courant d'émission (énergie, et durée des impulsions, notamment); enfin, le pas d'échantillonnage est avantageusement compris entre 2 et 50 millisecondes.

Avantageusement, le courant d'excitation ou d'émission est répété d'une manière aléatoire; on en conserve trace pour l'élaboration de la représentation numérique brute. Ici, le caractère aléatoire s'entend compte-tenu du nombre de répétitions prévu. Schématiquement, il signifie qu'aucune ou pratiquement aucune périodicité n'apparaît dans les quelques centaines de répétitions du courant d'émission. Bien entendu, le courant d'émission peut comprendre plusieurs groupes – de préférence des triplets – d'impulsions de polarité alternée, auquel cas le caractère aléatoire, le cas échéant, s'applique à ces groupes, ensemble.

Selon une autre variante très avantageuse, dans chaque groupe d'impulsions d'excitation, la première impulsion comprend deux créneaux de courant de polarité opposée, sensiblement adjacents l'un à l'autre, d'énergie globale nulle, et de durée brève à l'égard de celle de l'intervalle de temps de courant nul qui la suit. Les autres impulsions du groupe possèdent la même forme que la première, mais avec une polarité inversée à chaque fois.

D'autres caractéristiques de l'invention sont relatives à des dispositifs de terrain, qui par un agencement particulier des dipôles, permettent une réduction du bruit. Ces dispositifs de terrain préférentiels ont en commun le fait que le dipôle émetteur est un dipôle électrique, comprenant deux électrodes espacées entre lesquelles est appliqué le courant d'émission. Ces deux électrodes définissent un axe d'émission.

Dans un premier dispositif de terrain, le dipôle récepteur est un autre dipôle électrique placé sur un axe de réception parallèle à l'axe d'émission, voisin du dipôle émetteur, et plus court que lui. Selon l'invention, on dispose sur l'axe d'émission un second dipôle électrique émetteur, sensiblement adjacent du premier, et de même longueur que lui, les deux dipôles émetteurs étant ainsi symétriques l'un de l'autre par rapport à un axe, perpendiculaire à l'axe d'émission; on applique simultanément aux deux dipôles émetteurs des courants d'excitation sensiblement égaux et de polarité opposée; on dispose sur l'axe de réception un second dipôle électrique récepteur symétrique du premier par rapport audit axe de symétrie; et l'on détecte simultanément les signaux apparaissant aux bornes des deux dipôles récepteurs, l'addition à chaque instant, des deux signaux détectés, avec des polarités opposées, permettant de réduire sensiblement l'effet des bruits électriques ambiants sur les signaux transitoires utiles. Dans ce cas, avantageusement, au moins un dipôle magnétique est disposé au voisinage de chacun des dipôles électriques récepteurs, ces dipôles magnétiques étant aussi symétriques par rapport audit axe de symétrie.

Dans un second dispositif de terrain, le dipôle récepteur est un autre dipôle électrique plus court, et d'axe perpendiculaire à celui du dipôle émetteur, l'intersection des axes des deux dipôles étant voisine d'une extrémité du dipôle émetteur. Selon l'invention, on place un second dipôle électrique récepteur symétrique du premier par rapport à l'axe du dipôle émetteur, et on détecte simultanément les signaux apparaissant aux bornes des deux dipôles récepteurs, l'addition à chaque instant des deux signaux détectés avec des polarités opposées permettant de réduire sensiblement l'effet des bruits électriques ambiants sur les signaux transitoires utiles.

Dans un troisième dispositif de terrain, le dispositif récepteur comprend un dipôle magnétique voisin du dipôle électrique émetteur, entre ses extrémités. Selon l'invention, on place un second dipôle magnétique symétrique du premier par rapport à l'axe du dipôle émetteur, et on détecte simultanément les signaux apparaissant aux bornes des deux dipôles magnétiques, l'addition à chaque instant des deux signaux détectés avec des polarités opposées permettant de réduire sensiblement l'effet des bruits électriques ambiants sur les signaux transitoires utiles.

On se rappellera que le prétraitement comporte l'accumulation statistique en fonction du temps des signaux transitoires numériques recueillis, successivement, pendant les intervalles de temps précités, consécutifs à chaque impulsion d'excitation. Dans le cas des dispositifs de terrain qui fournissent deux signaux détectés simultanés, l'addition des deux signaux peut s'effectuer soit sur le terrain, en étant enregistrée séparément en plus des deux signaux détectés, soit ultérieurement, dans le cadre du prétraitement ou du traitement.

Dans ce qui précède, les mesures faites en différentes stations sont traitées pour aboutir à une représentation figurative des résultats, rapportée à la situation géographique des station. Et le géophysicien y recherche, dans les signaux provenant des mesures, des «anomalies» dont il estime qu'elles correspondent à ses objectifs. La figure typique des résultats obtenue est une série d'anomalies représentées sous forme de sections temps ou de cartes (anomalies résiduelles du signal de réponse transitoire).

Une variante préférentielle de l'invention améliore la représentation des anomalies: la demanderesse a pu obtenir une configuration plus ordonnée, que l'œil du géophysicien compare immédiatement à une structure de sous-sol – telle qu'on l'obtient en prospection du type sismique réflexion, par exemple.

La variante préférentielle s'intéresse aux variations de la pente de la réponse transitoire en fonction du temps, et ce, pour chaque station de prospection. En notant par une fonction du temps $y(t)$ cette réponse transitoire, on préfère actuellement déterminer sa dérivée temporelle $y'_t(t) = \frac{dy(t)}{dt}$, ou mieux l'inverse de sa dérivée logarithmique $\frac{y}{y'_t}$; on les appellera ci-après «fonction indicatrice», étant observé que, dans le cas de la dérivée logarithmique, la fonction indicatrice représente pratiquement, en fonction du temps, les constantes de temps d'exponentielles approchant au mieux la réponse transitoire.

La demanderesse a observé que ces fonctions indicatrices $I(t)$ sont affectées pour chaque station, d'une sorte de dérive – elles varient elles-mêmes en fonction du temps – et que cette dérive est assez semblable pour toutes les stations d'un profil géologique étudié, ou d'une partie de profil.

Selon la variante préférentielle, on recherche alors une indicatrice «régionale», qui représente la dérive commune à plusieurs stations. Et l'on soustrait cette dérive ou indicatrice régionale des fonctions indicatrices locales qui concernent individuellement chacune des stations. Les indicatrices «résiduelles» ainsi obtenues font alors l'objet de la représentation figurative finale destinée au géophysicien.

On a pu constater qu'en mettant en œuvre ce procédé sur une série de stations sensiblement alignées, et en construisant une section-temps (une coordonnée d'espace, prise sur la ligne des stations, et la coordonnée de temps du phénomène transitoire), on a pu obtenir une figure qui représente une structure ressemblant à la structure du sous-sol, telle qu'elle est fournie par la prospection géophysique en sismique réflexion.

Ce faisant, il s'est avéré souhaitable que la réponse transitoire soit représentée avec une échelle temporelle de la forme racine carrée de t, pour être directement comparable à la représentation en échelle de temps linéaire de la sismique réflexion.

L'invention propose également différentes manières d'effectuer les opérations de prétraitement ainsi que de traitement, et aussi des moyens pour la mise en œuvre du procédé sur le terrain.

Ces caractéristiques de l'invention, de même que d'autres caractéristiques et avantages qu'elle offre, apparaîtront à la lecture de la description détaillée qui va suivre, faite en référence aux dessins annexés, donnés uniquement à titre d'illustration non limitative, et sur lesquels:

- les figures 1 à 4 illustrent schématiquement quatre dispositifs émetteurs-récepteurs de type connu;
- les figures 5 à 7 illustrent schématiquement trois dispositifs émetteurs-récepteurs dont l'invention peut faire usage à titre préférentiel;
- les figures 8A, 8B et 9A, 9B illustrent respectivement deux types de réponse transitoire du sous-sol à un courant d'excitation en créneau;
- les figures 10A et 10B illustrent respectivement un exemple de courant d'excitation répété un grand nombre de fois, et le signal détecté correspondant;
- la fig. 11 illustre un exemple de courant d'excitation, à répétition aléatoire, où le cycle élémentaire comprend deux impulsions de courant constant, avec polarité alternée;
- la fig. 12 illustre un exemple de courant d'excitation à répétition aléatoire, où le cycle élémentaire comprend des triplets d'impulsions de courant constant, avec polarité alternée;
- les figures 13 et 14 illustrent des courants d'excitation de cycles semblables aux cycles des figures 11 et 12, respectivement, mais où chaque impulsion comporte un changement de polarité qui lui donne une valeur moyenne sensiblement nulle;
- la fig. 15 représente un exemple de courant associée à la représentation numérique brute;
- la fig. 16 représente un exemple de courant associée à la représentation numérique lissée;
- la fig. 17 représente schématiquement la réalisation d'un lissage par courbes cubiques;
- la fig. 18 est un tableau numérique qui fait apparaître verticalement en fonction du temps les représentations numériques obtenues après traitement pour six stations sensiblement alignées, dites profil B;
- la fig. 19 est une représentation figurative sous forme de section temps, correspondant au tableau de la fig. 18;
- la fig. 20 est une représentation figurative sous forme de carte, en courbes de niveau, réalisée à partir de quatre profils A, B, C, D, dont celui des figures 18 et 19;
- la fig. 21 est un graphique illustrant l'étape de normalisation d'après la réponse théorique du sous-sol simplifié, pour la variante préférentielle de l'invention;
- la fig. 22 illustre l'allure de la représentation monotone de la réponse transitoire obtenue après normalisation;
- la fig. 23 illustre l'allure d'une indicatrice locale obtenue comme dérivée logarithmique de la courbe de la fig. 22, ainsi qu'une indicatrice régionale; et
- la fig. 24 illustre l'allure d'une indicatrice résiduelle obtenue par différence à partir des courbes de la fig. 23, et servant de base à la représentation figurative selon la variante préférentielle de l'invention.

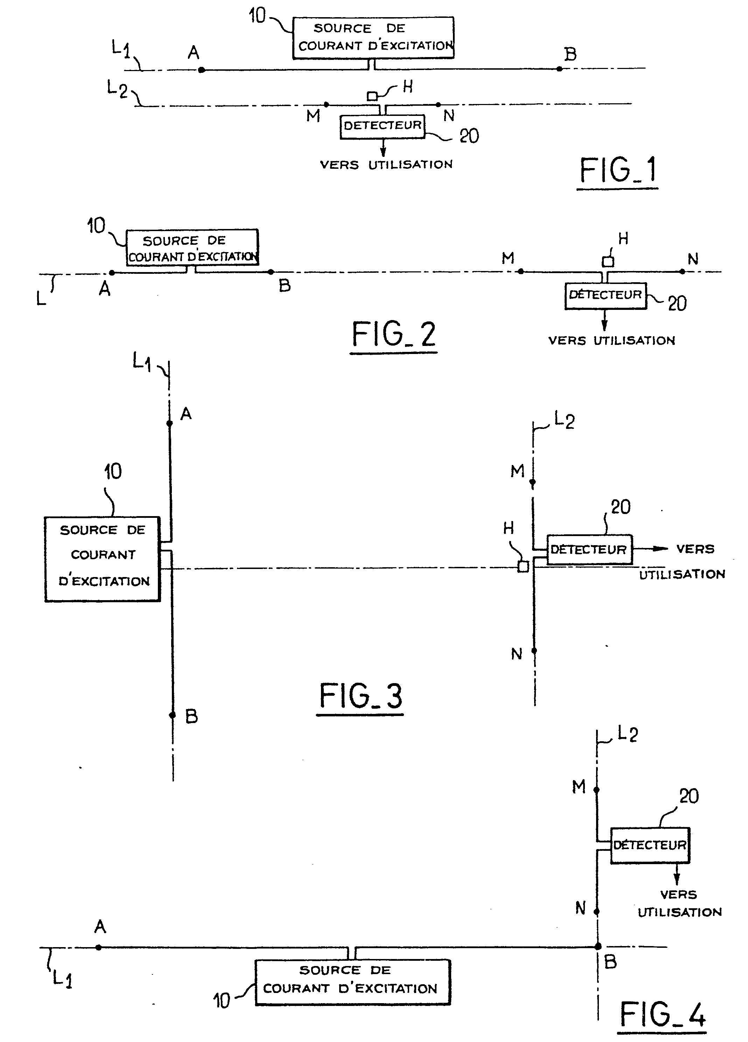

En prospection géophysique par courants transitoires on commence par disposer en coopération avec le sous-sol un dipôle émetteur, ainsi qu'un dipôle récepteur sensible au champ électromagnétique. L'ensemble émetteur-récepteur est fréquemment dénommé dispositif de terrain. Pour certaines applications, le dipôle émetteur peut être un dipôle magnétique. Mais, la plupart du temps, on préfère un dipôle électrique à l'émission. Ainsi, sur les fig. 1 à 4, le dipôle électrique émetteur est noté A–B. Aux points A et B sont plantées dans le sol deux électrodes. Des fils partent de ces électrodes sensiblement selon l'axe A–B, pour venir aux deux sorties d'une source de courant d'excitation 10. On décrira plus loin la forme du courant d'excitation.

Le dipôle récepteur peut être lui aussi un dipôle électrique M–N, avec deux électrodes plantées dans le sol en M et N, et deux fils selon l'axe M–N qui viennent rejoindre un organe détecteur 20. Ce dernier mesure la tension existant entre les points M et N, qui représente une composante du champ électromagnétique.

Dispositifs de terrain

On connaît déjà différentes dispositions relatives des dipôles électriques émetteur et récepteur;
- Sur la fig. 1, le dipôle électrique récepteur est placé sur un axe de réception $L_2$, parallèle à l'axe $L_1$ du dipôle émetteur. Le dipôle récepteur est voisin du dipôle émetteur, et plus court que lui. Cette configuration est souvent dénommée «dispositif SCHLUMBERGER». Bien entendu, l'ordre de grandeur des dimensions M–N et A–B est de plusieurs centaines de mètres.
- Sur la fig. 2, les deux dipôles émetteur A–B et récepteur M–N sont alignés sur le même axe L. Cette configuration est connue sous le nom de dipôle-dipôle polaire.
- Sur la fig. 3, la disposition est généralement semblable à celle de la fig. 1, mais le dipôle récepteur M–N est maintenant assez éloigné du dipôle émetteur A–B. Cette configuration est connue sous le nom de dipôle-dipôle équatorial.
- Sur la fig. 4, le dipôle émetteur A–B est disposé sur un axe d'émission $L_1$, alors que le dipôle récepteur M–N est disposé sur un axe de réception $L_2$ perpendiculaire à $L_1$, au voisinage de l'une des extrémités, B par exemple, du dipôle émetteur. Cette configuration est connue sous le nom de dipôle-dipôle perpendiculaire.

Avec un dipôle émetteur du type électrique, le dipôle récepteur peut être du type magnétique. Ainsi, sur la fig. 1, un dipôle magnétique H est disposé au voisinage du segment M–N. Ce dipôle magnétique H peut être sensible à une ou plusieurs composantes du champ magnétique. Et il peut être utilisé soit à la place du dipôle électrique récepteur, soit en plus de lui. On retrouve également un dipôle magnétique H sensiblement au milieu du segment M–N sur la fig. 2, ainsi que sur la fig. 3.

Les dispositifs des fig. 1 à 4 sont ceux que, parmi d'autres, on utilise le plus fréquemment à l'heure actuelle en prospection géophysique par courants transitoires.

Bien que la présente invention puisse faire usage des dispositifs de terrain connus, il s'est avéré préférable, au moins pour certaines applications, d'utiliser des dispositifs de terrain spéciaux. Ces derniers sont remarquables par une disposition différentielle permettant une addition des signaux détectés et une soustraction des bruits.

La demanderesse a observé que certains dispositifs de terrain pouvaient être doublés, et faire l'objet d'un montage différentiel, dans lequel se réalise une substantielle diminution des bruits. Dans la suite, on distinguera ces dispositifs préférentiels par l'appellation «dispositifs anti-bruit».

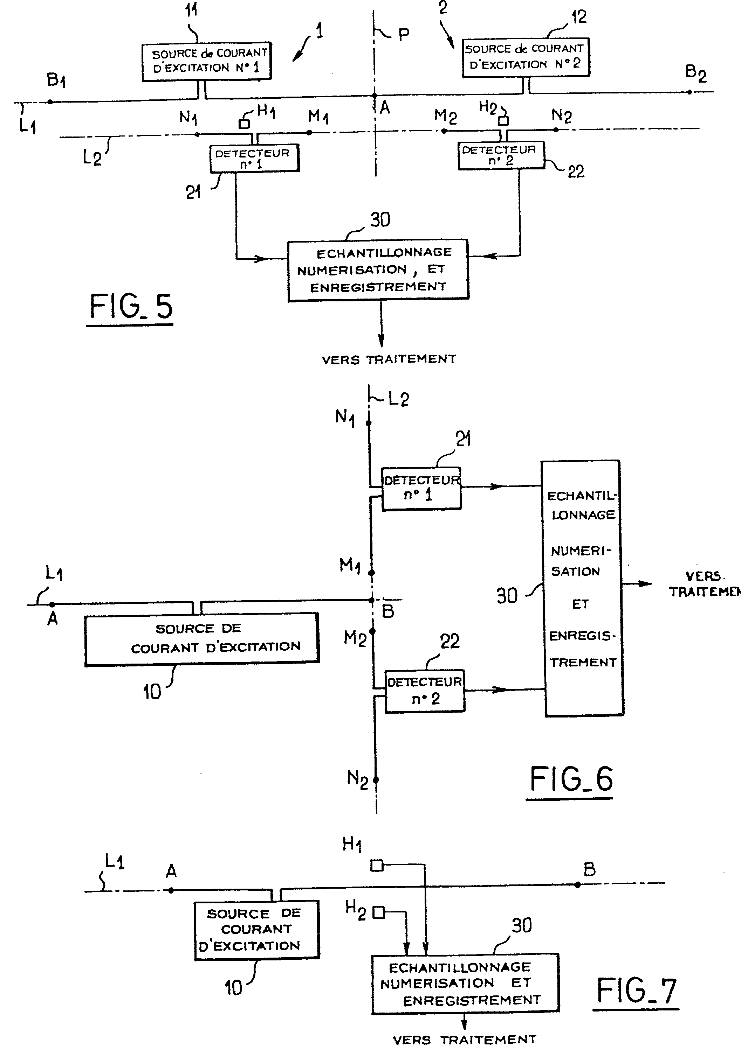

Le premier dispositif anti-bruit, illustré sur la fig. 5, comporte un doublement du dispositif SCHLUMBERGER de la fig. 1. Plus précisément, sur l'axe d'émission $L_1$, on dispose un second dipôle électrique émetteur A–B₂. Les deux dipôles émetteurs sont de même longueur, et demeurent ainsi symétriques par rapport à l'axe P, perpendiculaire à l'axe $L_1$. Dans l'exemple représenté, les deux dipôles ont une extrémité commune A. L'axe de symétrie médiateur des autres extrémités $B_1$–$B_2$, passe donc par cette extrémité commune A. Deux sources 11 et 12 appliquent respectivement et simultanément aux deux dipôles émetteurs A–$B_1$ et A–$B_2$ des courants d'excitation sensiblement égaux et de polarité opposée. La polarité opposée signifie ici que le courant passant dans le dipôle électrique A–$B_1$ et le courant passant dans le dipôle électrique A–$B_2$ ne sont pas de même sens lorsqu'on parcourt l'axe $L_1$ dans un sens donné. En pratique, on utilise une seule source qui alimente symétriquement les deux lignes AB₁ et AB₂.

Sur l'axe de réception $L_2$, on dispose également deux dipôles électriques récepteurs $M_1$–$N_1$ et $M_2$–$N_2$ symétriques l'un de l'autre par rapport à la médiatrice P. Les deux dipôles récepteurs sont donc égaux, et l'on remarquera que l'ensemble des dipôles est symétrique par rapport à la perpendiculaire commune P aux axes d'émission et de réception $L_1$ et $L_2$. Des organes respectifs 21 et 22 détectent simultanément les signaux apparaissant aux bornes des deux dipôles électriques récepteurs $M_1$–$N_1$ et $M_2$–$N_2$. Avec un tel montage, l'addition à chaque instant des deux signaux détectés avec des polarités opposées permet de réduire sensiblement l'effet des bruits électriques ambiants sur les signaux transitoires utiles. Dans une variante, on peut disposer, soit à la place des dipôles électriques récepteurs soit en complément, des dipôles magnétiques $H_1$ et $H_2$ sensibles à une ou plusieurs composantes du champ magnétique, et sensiblement symétriques par rapport à la médiatrice P.

Les détecteurs 21 et 22 sont reliés à un dispositif électronique d'échantillonnage de numérisation et d'enregistrement, désigné par la référence 30. Les données ainsi enregistrées pourront ensuite être soumises à un traitement, d'une manière que l'on décrira plus loin. Bien entendu, le cas échéant, les magnétomètres $H_1$ et $H_2$ sont également reliés au dispositif d'échantillonnage, numérisation et enregistrement 30. Ici, leurs liaisons n'ont pas été représentées pour simplifier le dessin.

Le second dispositif anti-bruit, illustré sur la fig. 6, est à certains égards comparable au dipôle-dipôle perpendiculaire de la fig. 4. Selon l'invention, on place un second dipôle électrique récepteur $M_2$–$N_2$ symétriquement du premier $M_1$–$N_1$ par rapport à l'axe $L_1$ du dipôle émetteur. Comme précédemment, on détecte simultanément les signaux apparaissant aux bornes des deux dipôles récepteurs, à l'aide des détecteurs 21 et 22. Et les signaux ainsi détectés sont appliqués à un circuit d'échantillonnage, numérisation et enregistrement 30. L'addition à chaque instant des deux signaux détectés avec des polarités opposées, c'est-à-dire symétriques par rapport à l'axe $L_1$, permet de réduire sensiblement l'effet des bruits électriques ambiants sur les signaux transitoires utiles.

Un troisième dispositif anti-bruit est illustré sur la fig. 7. Dans celui-ci, les dipôles récepteurs sont du type magnétique. Deux magnétomètres $H_1$ et $H_2$ sont disposés symétriquement par rapport au dipôle électrique émetteur A–B, sensiblement en son milieu, et au voisinage de celui-ci. Ces magnétomètres sont sensibles à une ou plusieurs composantes du champ magnétique, de préférence au moins au champ magnétique vertical, comme dans les dispositifs de terrain précédemment décrits. De la même manière que pour la fig. 5, les deux composantes du champ magnétique ainsi obtenu sont appliquées au circuit d'échantillonnage, de numérisation et d'enregistrement 30. L'addition à chaque instant des deux signaux détectés avec des polarités opposées permet de réduire sensiblement l'effet des bruits électriques ambiants sur les signaux transitoires utiles.

Bein entendu, pour effectuer, après l'enregistrement, l'addition des deux signaux simultanément détectés, il est nécessaire que cet enregistrement soit effectué d'une manière synchrone,.ou encore temporellement repéré.

Des essais réalisés par la demanderesse ont montré que ces dispositifs anti-bruit permettent dans certains cas d'augmenter le niveau du signal mesuré (qui peut être doublé par rapport aux dispositifs correspondants de la technique antérieure), tout en permettant une réduction substantielle du bruit. En termes de rapport signal/bruit, l'amélioration est donc nettement supérieure au facteur 2.

En ce qui concerne plus particulièrement le dispositif anti-bruit de la fig. 5, il a été indiqué que les deux courants d'excitation devaient être sensiblement égaux. On entend par là qu'ils doivent posséder des formes d'onde identiques, et sensiblement de même amplitude à chaque instant. Toutefois, au moins dans certains cas, où le sous-sol est proche de la structure tubulaire, il est possible que les amplitudes soient différentes pourvu qu'elles se trouvent dans un rapport constant en fonction du temps. En règle générale, la demanderesse a observé que des rapports d'amplitude inférieurs ou égaux à 1,2 ou mieux 1,1 demeuraient acceptables.

Courant d'excitation

On s'intéressera maintenant à la forme du courant d'excitation appliqué au dipôle émetteur.

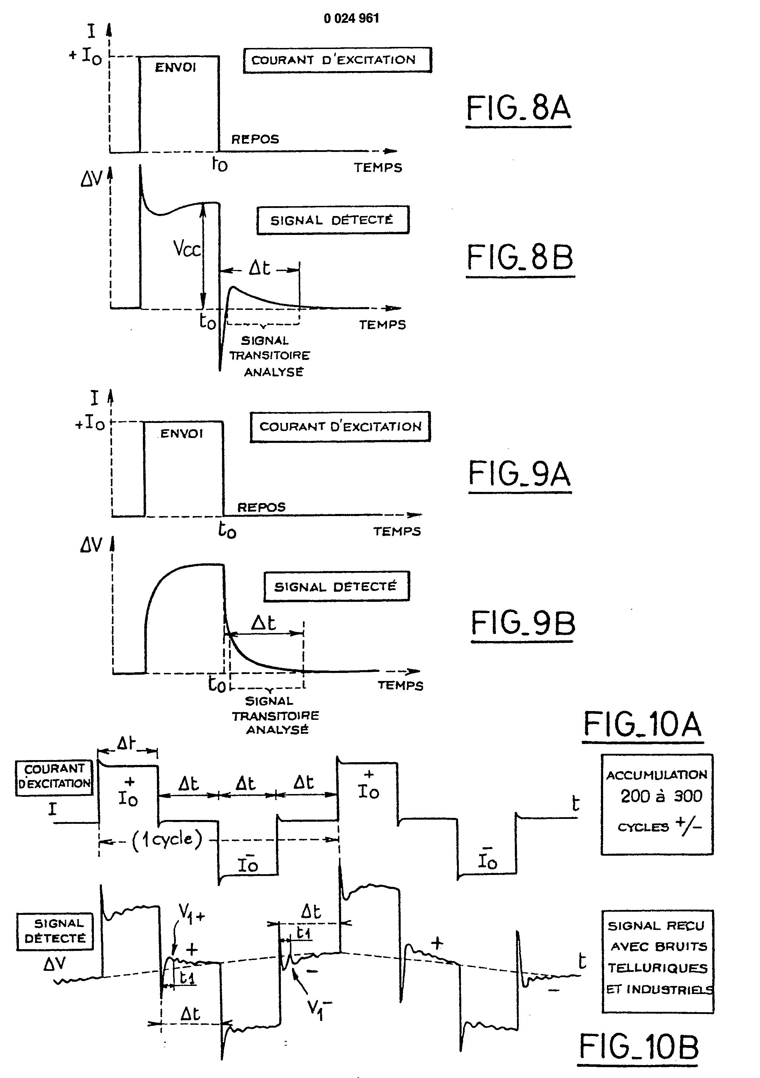

Dès lors qu'il contient des variations ou transitions, tout type de courant d'excitation, est susceptible de produire une réponse transitoire du sous-sol. Ici, on appelle courant d'excitation impulsionnel un tel courant comportant au moins une variation ou transition, que l'on définit aussi par le terme «impulsion». En fait, comme les signaux reçus sont très faibles, il est habituel de les mesurer pendant que le courant émis est nul. C'est pourquoi les impulsions du courant d'excitation sont suivies d'intervalles de temps de courant nul. En pratique, pour des raisons technologiques, lesdites impulsions d'excitation sont la plupart du temps constituées d'un courant constant. Ainsi, on connaît des impulsions d'excitation constituées d'un créneau de courant constant suivi d'un intervalle de temps de courant nul, comme l'illustrent les fig. 8A et 9A. L'allure du signal reçu dépend non seulement de la structure du sous-sol, mais aussi du dispositif de terrain précisément utilisé. Ainsi, un dispositif du type SCHLUMBERGER (fig. 1 ou bien fig. 5) fournira aux bornes du dipôle récepteur un signal reçu de la forme illustrée par la fig. 8B.

Pour un tel signal, aussi bien au début du créneau de courant émis $+ I_0$ qu'à la fin de ce créneau, on observe une forte pointe de tension au niveau du dipôle récepteur. Par contre, un dispositif de terrain tel que celui de la fig. 2 fournit une réponse différente, telle que celle de la fig. 9B: aucune pointe de tension détectée n'apparaît ni au début ni à la fin du créneau à $+ I_0$.

L'examen attentif des fig. 8B et 9B montre qu'à partir de l'instant $t_0$, c'est-à-dire pendant l'intervalle de temps où le courant d'excitation est nul, le signal transitoire fait l'objet de variations importantes pendant un temps relativement bref, noté $\Delta t$, après quoi il tend très rapidement vers zéro. On se rappellera également que les tensions détectées après le créneau de courant d'excitation sont de l'ordre du microvolt pour une intensité $I_0$ de l'ordre de 1 Ampère.

Selon la présente invention, le courant d'excitation est répété un grand nombre de fois, c'est-à-dire plusieurs centaines de fois, de préférence entre 200 et 300 fois. Selon l'exemple de la fig. 10A, un cycle du courant d'excitation comprend tout d'abord un créneau de courant constant $+ I_0$, suivie d'un intervalle de temps de courant nul, puis d'un autre créneau de courant constant $- I_0$, suivi à son tour d'un autre intervalle de temps de courant nul. Les intervalles de temps de courant nul sont de durée au moins égale à une durée prédéterminée $\Delta t$. De même, les intervalles de temps consacrés aux créneaux positif et négatif sont de préférence égaux entre eux, et de durée voisine de celle des intervalles de temps à courant nul qui les sépare. Sur l'exemple illustré par la fig. 10A, les quatre intervalles de temps élémentaires d'un cycle sont tous égaux entre eux et à $\Delta t$.

La fig. 10B illustre l'allure du signal détecté $\Delta V$ aux bornes d'un dipôle récepteur du type de celui de la fig. 1; pour le courant d'excitation défini par la fig. 10. Le signal de la fig. 10B est perturbé par différents bruits. Les bruits de basse fréquence, généralement telluriques, correspondent à la variation du niveau moyen du signal détecté. Les bruits industriels, qui sont de fréquence généralement plus élevée, se retrouvent dans les différentes parties du signal détecté.

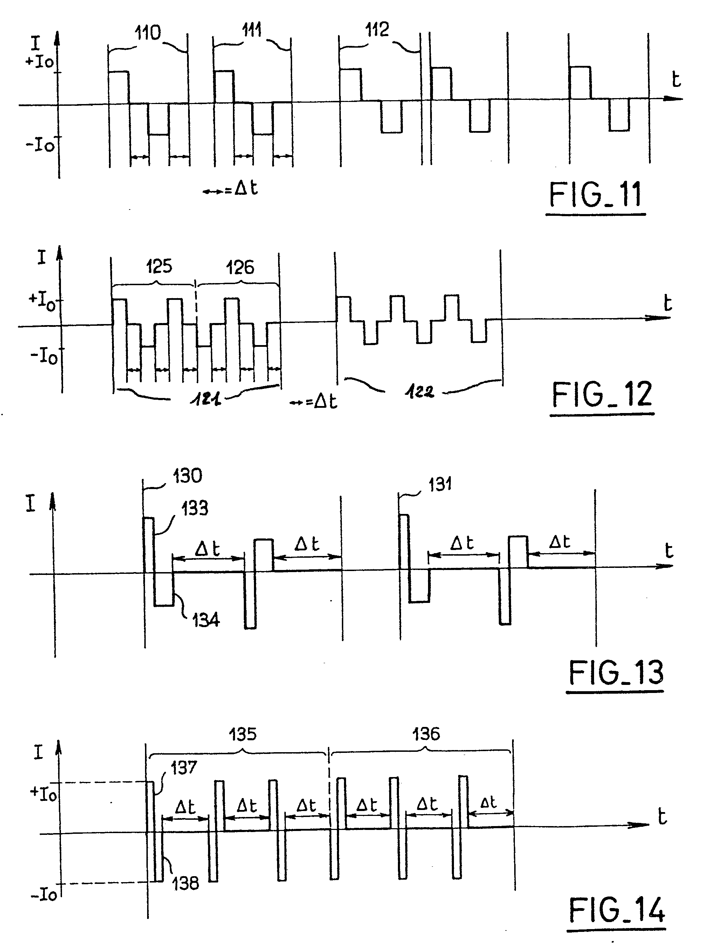

Bien que l'on puisse faire usage d'un signal d'excitation répété périodiquement, tel qu'un enchaînement de 200 ou 300 cycles comme le montre la fig. 10A, il s'est avéré préférable que la répétition du courant d'excitation soit aléatoire, c'est-à-dire que les instants de début de cycle soient définis sans périodicité. Alors que, dans le signal de la fig. 10A, il n'y a pas de limite nette entre cycles consécutifs, avec un signal à répétition aléatoire, on distingue bien les différents cycles 110, 111, 112 et ainsi de suite (fig. 11).

La fig. 12 montre un exemple plus avantageux de signal à répétition aléatoire, où le cycle répété comprend des triplets d'impulsions alternés (deux triplets seulement – 125 et 126 – sont représentés pour un cycle tel que 121 ou 122; leur nombre peut en pratique être bien plus élevé). Déjà avantageuse sur le plan du bruit par elle-même, la répétition aléatoire le devient plus encore lorsque le courant d'excitation se définit par triplets. On notera que dans un même cycle, aussi bien les créneaux positifs et négatifs que les périodes de courant nul sont de préférence de même durée $\Delta T$. En revanche, dans le signal à répétition aléatoire, les débuts de cycle sont très variables.

Dans ce qui précède, les impulsions d'excitation sont de simples créneaux de courant constant. La demanderesse a observé qu'une nouvelle forme d'impulsion est plus avantageuse. Cette forme est illustrée sur les fig. 13 et 14, qui en donnent deux exemples différents, avec une échelle de temps dilatée.

La fig. 13 illustre deux cycles d'excitation 130 et 131, comparables à ceux de la fig. 11. La fig. 14 illustre un seul cycle à deux triplets 135 et 136, comparable à ceux de la fig. 12.

Ici, chaque impulsion comprend deux créneaux de courant de polarité opposée (133 et 134 ou 137 et 138), qui sont sensiblement adjacents l'un à l'autre et de durée brève à l'égard du temps de courant nul qui suit (l'impulsion est au maximum de quelques dixièmes de seconde, de préférence au plus égale à un dixième de seconde). Les deux créneaux adjacents peuvent être d'amplitude différente (fig. 13), ou de même amplitude (fig. 14), pourvu que leur moyenne linéaire soit nulle, c'est-à-dire que la surface du créneau positif (entre la courbe de courant en fonction du temps et l'axe de courant nul) soit égale à la surface du créneau négatif. Bien entendu, les deux éléments adjacents de polarité opposée peuvent différer de la forme de créneaux purs, pourvu que cette condition de moyenne nulle soit sensiblement respectée.

Les fig. 13 et 14 illustrent respectivement un ou des cycles de courant d'excitation à deux impulsions et à deux triplets d'impulsions, de la forme définie ci-dessus; on voit que les différentes impulsions possèdent la même forme, mais avec une polarité inversée à chaque fois.

La demanderesse a observé que cette forme particulière d'impulsions donne lieu à une réponse plus faible d'un sous-sol stérile, ce qui permet de mieux faire ressortir la réponse transitoire additionnelle d'une anomalie ou inclusion.

Signaux transitoires détectés

On s'intéressera maintenant à la détection du signal transitoire, au niveau du dipôle récepteur.

En règle générale, les procédés de la technique antérieure préconisent la mesure d'une valeur ou de quelques valeurs du signal transitoire présent après l'application du créneau de courant d'excitation. Selon la présente invention, au contraire, on définit des intervalles de temps respectivement consécutifs aux impulsions d'excitation et contemporains du courant nul d'excitation; ces intervalles de temps sont de durée prédéterminée, choisie pour couvrir sensiblement toute la partie utile du phénomène transitoire. Etant observé que le phénomène transitoire tend rapidement vers zéro, la partie utile est définie en tenant compte du fait que, rapidement, le niveau du signal transitoire devient très inférieur au niveau du bruit. Et l'invention prévoit la détection du signal transitoire en fonction du temps au moins pendant chacun des intervalles de temps ainsi définis. Dans la suite, on notera $\Delta t$ la durée prédéterminée des intervalles de temps pendant lesquels s'effectue la détection.

Selon l'invention, on procède à l'échantillonnage, à la numérisation et à l'enregistrement temporellement repéré du signal détecté, au moins pendant les intervalles de temps prédéterminés de durée $\Delta t$. En pratique, on réalise ces opérations d'une manière continue sur le signal détecté $\Delta V$, aussi bien que pour le courant d'excitation I. La durée $\Delta t$ des intervalles de temps est choisie comprise entre 1 seconde et 20 secondes environ, en tenant compte des caractéristiques du courant d'émission. Enfin, le pas d'échantillonnage est de préférence compris entre 2 et 50 millisecondes. Il est apparu important que l'enregistrement numérique soit précis. A cet effet, un enregistrement à 11 bits plus le signe est actuellement considéré comme satisfaisant.

L'enregistrement numérique obtenu peut ensuite être traité sur ordinateur. L'invention fait usage d'un prétraitement que l'on peut réaliser sur le terrain ou bien juste avant le traitement sur ordinateur.

Prétraitement

Ce prétraitement comporte en premier lieu l'accumulation des échantillons qui se correspondent temporellement dans les intervalles de temps de durée prédéterminée définis plus haut. En d'autres termes, on élabore une représentation numérique brute du phénomène transitoire en fonction du temps, évaluée statistiquement à partir des éléments de l'enregistrement numérique qui se correspondent temporellement dans les intervalles de temps successifs.

L'élaboration de la représentation brute peut se faire par une simple moyenne, mais on utilisera de préférence des techniques statistiques plus évoluées: estimation de la valeur probable de la mesure sur l'ensemble des échantillons recueillis, en rejetant toutefois les portions d'enregistrement trop perturbées.

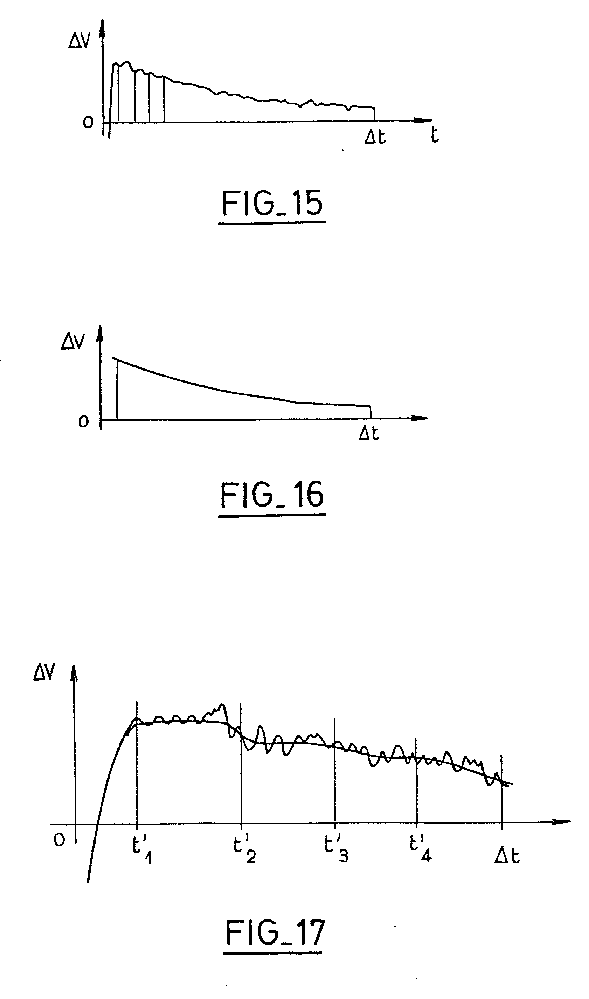

La courbe de la fig. 15 illustre l'allure de cette représentation numérique brute, cumulée sur l'intervalle de temps $\Delta t$. Les traits verticaux rappellent que cette courbe est constituée, de manière discontinue, à partir d'un grand nombre d'échantillons numériques.

Pour élaborer une telle représentation numérique brute, on opère de préférence comme suit:
— les intervalles de temps de durée $\Delta t$ consécutifs à chacune des impulsions d'excitation sont localisés dans le signal détecté, à partir de ses propres transitions ou, de préférence, à partir de celles du courant d'excitation;
— les signaux numériques contenus dans chacun de ces intervalles de temps sont décalés ou recadrés dans le temps, de telle sorte que tous les intervalles de temps successifs soient ramenés en coïncidence sur un intervalle de temps unique de durée $\Delta t$; et
— on effectue la moyenne simple ou le traitement statistique plus évolué, tel que défini plus haut, à chaque instant de l'intervalle de temps unique; en pratique, on construit la différence D entre deux valeurs $V_{1+}$ et $V_{1-}$ obtenues au même instant $t_1$ sur deux signaux transitoires adjacents (fig. 10B).

Dans le cas de triplets on construit deux différences; l'une, $D_1$ est prise entre la première et la seconde impulsion; l'autre, $D_2$ est prise entre la seconde et la troisième impulsion; on fait ensuite la différence $\delta = D_1 - D_2$. On recommence alors avec les troisième, quatrième et cinquième impulsions.

Dans les deux cas, on effectue ensuite la moyenne globale des différences D ou $\delta$ ainsi obtenues, en tenant compte de la polarité du courant d'excitation.

Il en résulte la représentation numérique brute, constituée d'une pluralité d'échantillons numériques répartis de l'instant zéro à l'instant $\Delta t$, comme le montre la fig. 15.

Il se peut, en particulier dans le cas du courant d'émission à répétition aléatoire, qu'après le recadrage temporel des signaux numériques, les échantillons numériques ne se trouvent pas ramenés rigoureusement au même instant. En pareil cas, on effectue l'accumulation – moyenne simple ou traitement statistique plus évolué – sur des échantillons numériques qui correspondent approximativement au même instant, à un ou quelques pas d'échantillonnage près.

L'étape suivante du prétraitement est un filtrage numérique lissant qui fournit une représentation numérique lissée du phénomène transitoire, débarrassée d'une partie substantielle des bruits ambiants.

Ce filtrage numérique peut comprendre une ou plusieurs des opérations suivantes:

– filtrage numérique passe-bas, ou passe bande, pour éliminer les fréquences qui sont essentiellement dues aux bruits;
– remplacement de chaque échantillon numérique par la valeur moyenne, pondérée ou non, de l'ensemble des échantillons numériques contenus dans une fenêtre courante, de largeur choisie, qui entoure l'échantillon considéré; ceci peut être effectué sur tous les échantillons numériques de la représentation brute, ou seulement sur certains d'entre eux, régulièrement répartis de préférence, et choisis assez nombreux pour obtenir un nombre suffisant de points dans la représentation numérique lissée;
– détermination par calcul numérique d'un enchaînement de courbes cubiques (du troisième degré) qui approchent au mieux l'allure de la courbe définie par la représentation numérique brute. Dans ce cas, la représentation numérique lissée est constituée des valeurs ou échantillons numériques associées à l'enchaînement de courbes cubiques.

La fig. 16 schématise la courbe associée à la représentation numérique lissée.

La fig. 17 illustre le lissage par cubiques: on découpe l'intervalle de temps 0, $\Delta t$ en plusieurs intervalles plus petits, délimités par les instants $t'_1$, $t'_2$, $t'_3$ et $t'_4$. On recherche une cubique approchant la courbe brute dans chacun de ces intervalles, en imposant la continuité des dérivées première et seconde à chaque limite d'intervalle; d'autres conditions peuvent être prévues, en particulier le fait que la somme des carrés des courbures de ces cubiques sur l'intervalle 0, $\Delta t$ soit minimale.

La plupart du temps, l'étape de lissage est suivie d'une normalisation de la représentation numérique lissée. Cette normalisation peut consister à faire le rapport du signal transitoire (selon la représentation numérique lissée) au courant d'excitation (en particulier dans le cas où chaque impulsion d'excitation est définie par un ou des créneaux de courant constant); elle peut également consister à faire le rapport du signal transitoire à la tension continue de régime permanent qu'il contient (Vcc; fig. 8B). L'invention préconise à titre préférentiel d'effectuer une ou plusieurs des normalisations suivantes (qui doivent être prises dans l'ordre le cas échéant):

– calcul de l'opérateur mathématique faisant passer de l'émission effectivement employée à une émission-type prédéterminée (impulsion de Dirac, par exemple), puis convolution de la représentation numérique lissée par cet opérateur;
– calcul d'une courbe théorique représentant le champ électromagnétique transitoire que créerait le courant d'émission effectivement utilisé pour un sous-sol simplifié, tabulaire par exemple, et soustraction de cette courbe théorique à la courbe définie par la représentation numérique lissée;
– calcul de l'aire totale de la courbe définie par la représentation numérique lissée, puis remplacement de chaque point de la courbe par le rapport de l'aire partielle sur une fenêtre prédéterminée incluant ce point à l'aire totale.

Après normalisation on obtient une représentation numérique lissée, et normalisée, à laquelle s'associe une nouvelle courbe, que l'on appellera courbe prétraitée, par opposition à la courbe brute résultant directement de la représentation numérique brute.

Dans son allure générale, la courbe prétraitée est en principe peu différente des courbes lissées (fig. 16 par exemple), et ne nécessite pas une nouvelle représentation.

Matériellement, le produit du prétraitement comprend:
– un fichier numérique contenant tous les paramètres de la station de mesure (coordonnées de position, conditions de mesure, etc) et tous les résultats du prétraitement, même intermédiaires;
– une liste des principaux résultats et paramètres;
– un dessin de la courbe pré-traitée et de la courbe brute de la station.

Bien entendu, ceci se répète pour chacune des stations de mesure.

On s'intéressera maintenant au traitement qui permet de passer du produit du prétraitement à la représentation figurative destinée au géophysicien.

Bien que différents traitements soient utilisables, la demanderesse utilise à titre préférentiel deux types de traitement:

– le premier fait intervenir individuellement les données relatives à chacune des stations de mesure; on effectue une approximation par exponentielles de la courbe définie par la représentation numérique lissée et normalisée, les exponentielles ètant de la forme $a \cdot e^{-t/\tau}$, où a est un coefficient, $\tau$ une constante de temps, et t la variable de temps.
– le second, qui peut être associé au premier, fait intervenir en plus la détermination d'une courbe régionale, à partir d'un ensemble de courbes locales obtenues sur une série de stations de mesure; on transforme ensuite les courbes locales initiales (du traitement) en courbes locales résiduelles, en leur soustrayant la courbe régionale. On parlera alors de traitement collectif.

## Traitements individuels

La demanderesse a observé que le phénomène transitoire peut se représenter (sinon s'expliquer) par un processus dépendant de constantes de temps qui sont elles-mêmes fonction des paramètres électromagnétiques du sous-sol. Ces constantes de temps sont recherchées soit pour chaque point temporel de la représentation du phénomène transitoire, soit pour l'ensemble de la courbe illustrant le phénomène transitoire en fonction du temps.

On notera $V_i$ chacun des points temporels de la représentation numérique du phénomène transitoire, l'indice i variant avec le temps.

Dans le premier cas, pour chaque point temporel $V_i$, on considère aussi les points adjacents de part et d'autre, à savoir au moins $V_{i-1}$ et $V_{i+1}$. Et l'on recherche une exponentielle de la forme

$a_i \cdot \exp\left(-\dfrac{t}{\tau_1}\right)$, qui passe au plus près de l'ensemble des points considérés. On associe donc à chaque point $V_i$ une constante de temps $\tau_i$ et un coefficient $a_i$, qui définissent une exponentielle tangente (ou mieux, osculatrice) à la courbe transitoire en ce point. On peut alors utiliser la constante de temps $\tau_i$ ou le coefficient $a_i$ pour la représentation figurative sous forme de section de temps, ou encore des expressions reliées à ces grandeurs (par exemple $a_i \cdot \tau_i / a_o$, ou $a_o$ représente le coefficient de l'exponentielle associée à l'instant initial).

Dans le second cas, on recherche un nombre fini d'exponentielles qui approchent l'ensemble de la représentation numérique V:

$$V(t) = \sum_{k=1}^{P} a_k \cdot \exp(-t/\tau_k).$$

La détermination des coefficients $a_k$ et $\tau_k$ se fait par un procédé de moindres carrés, soit pour chaque courbe locale, individuellement, soit pour l'ensemble des courbes locales. Le critère de moindres carrés peut être appliqué seulement à l'écart entre la courbe locale prétraitée et son approximation par exponentielles. On y ajoute, de préférence, des termes additionnels relatifs aux coefficients $a_{kj}$ et aux constantes de temps $\tau_{kj}$, où l'indice k correspond à une exponentielle pour une station donnée de mesure, tandis que l'indice j fait intervenir les différentes stations de mesure: On définit alors séparément un jeu de valeurs $a'_k$ et $\tau'_k$ considérées comme acceptables par le géophysicien compte tenu du problème posé, et des résultats sur l'ensemble des stations de mesure. Les termes additionels du critère de moindres carrés font alors intervenir, avec des coefficients appropriés, des expressions de la formule

$$\sum_k (a_{kj} - a'_k)^2 \text{ et } \sum_k (\tau_{kj} - \tau'_k)^2$$

Ensuite, on peut réaliser une représentation figurative sous forme de carte, à courbes de niveau ou à densité variable. Le paramètre représenté est alors l'une des constantes de temps $\tau_{kj}$ retenues avec indication de son coefficient $a_{kj}$, ou bien une combinaison de coefficients et/ou de constantes de temps.

## Traitement collectif

Comme précédemment indiqué, on détermine une courbe régionale à partir d'un ensemble de courbes locales. Plusieurs cas peuvent être distingués; si l'on part d'une série de stations de mesure alignées, la courbe régionale peut être établie en fonction du temps, par exemple sous forme d'une simple moyenne des courbes locales temporelles; si l'on part de stations réparties sur une zone à deux dimensions, la courbe régionale est alors établie spatialement, à temps constant prédéfini (après avoir ainsi fixé le temps, on peut définir des courbes locales spatiales, qui correspondent à un alignement de stations).

On connaît dans d'autres domaines de la géophysique divers procédés pour définir l'effet «régional». Selon l'invention, on préfère actuellement les procédés ci-après.

Selon le premier procédé, on définit un contour à deux dimensions, cercle ou ellipse de préférence, autour de chaque point, ce qui donne une zone courante de dimension choisie. On recherche alors la surface du second degré la plus proche des points présents à l'intérieur de ce contour.

On admettra par exemple que l'on dispose d'un ensemble de points définis, à temps constant, pour une série de stations données sur un domaine à deux dimensions x et y. Dans ce domaine, on trace un contour circulaire ou elliptique par exemple. Et l'on numérote par un indice i l'ensemble des points contenus dans ce contour, tout en notant $V_i$ la réponse transitoire du point à l'instant considéré.

On recherche alors une surface du second degré définie par ses paramètres a, b, c, d, e, f, et telle que l'expression suivante soit minimale:

$$\sum_i \lambda_i^2 \left[(a \cdot x_i^2 + 2b \cdot x_i \cdot y_i + c \cdot y_i^2 + dx_i + ey_i + f) - V_i\right]^2$$

où $\lambda_i$ désigne un coefficient de pondération qui dépend de la position du point i dans l'ellipse.

Si nécessaire, on répète cette opération avec un autre contour identique qui couvre une partie différente du domaine à deux dimensions. Bien entendu, on peut prévoir également des conditions de continuité aux limites entre les différentes surfaces du second degré ainsi définies.

L'ensemble des surfaces du second degré obtenues définit la réponse régionale sur l'ensemble du domaine d'observation.

On détermine alors des valeurs locales résiduelles en soustrayant de chaque valeur locale (telle que $V_i$), la valeur donnée au même point en tant que réponse régionale.

L'exemple ci-dessus se rapporte à une courbe régionale définie à temps constant pour deux coordonnées d'espace x et y. Bien entendu, on peut effectuer un traitement semblable pour des stations de mesure sensiblement alignées, avec cette fois une seule coordonnée d'espace x, et la variable de temps t.

Toutefois, pour déterminer une réponse régionale en fonction du temps sur des stations alignées, un autre processus, plus simple, est actuellement jugé préférable.

On part dans ce cas de la représentation numérique lissée, et normalisée par rapport d'aires (la dernière des normalisations données plus haut). Cette représentation numérique dépend du temps t, ainsi que de la coordonnée d'espace x, et est notée V (x, t). On détermine alors la moyenne simple des valeurs de V pour x variable et t constant, ce qui donne la réponse régionale $V_R$:

$$V_R (t) = \frac{1.}{N_x} \sum_x V (x, t),$$

où $N_x$ représente le nombre des valeurs de x sur lesquelles on fait la moyenne.

Ensuite, les valeurs locales résiduelles sont obtenues en soustrayant de chaque valeur locale la réponse régionale, à chaque instant. En notant $V_r$ (x, t) ces valeurs locales résiduelles, il vient:

$$V_r (x, t) = V(x, t) - V_R (t)$$

Quelle que soit la façon dont elles ont été obtenues, les valeurs locales résiduelles font ensuite l'objet d'une représentation figurative destinée au géophysicien. Cette représentation est une section – temps si les valeurs locales résiduelles sont fonction du temps et d'une variable d'espace. Elle sera une carte si les valeurs locales résiduelles sont définies à temps constant, en fonction de deux variables d'espace.

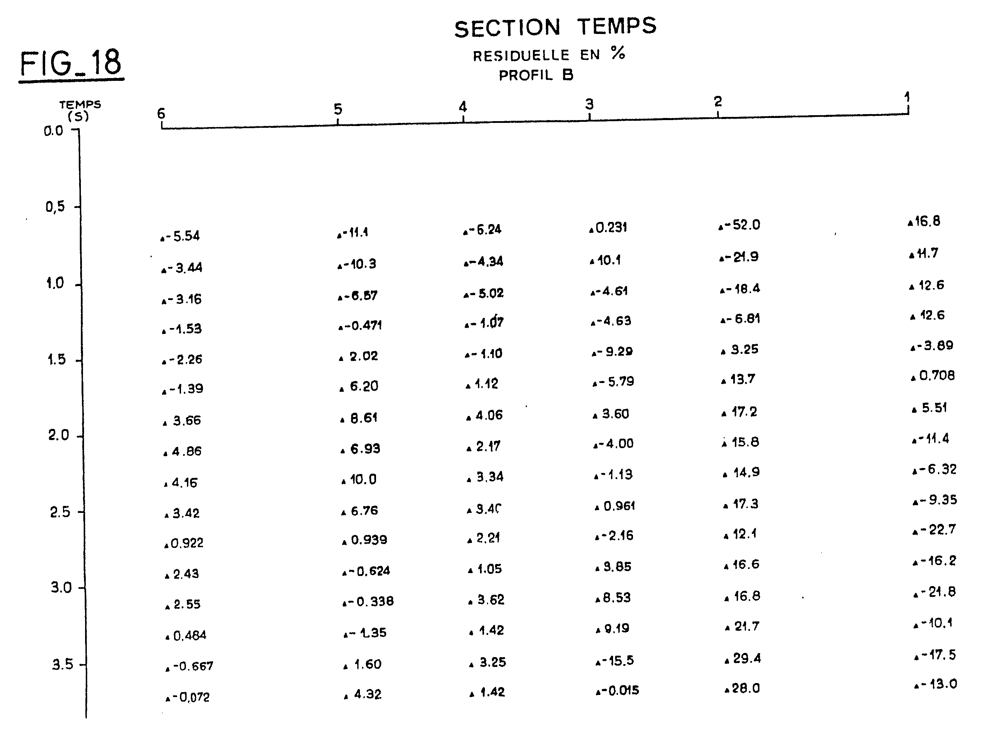

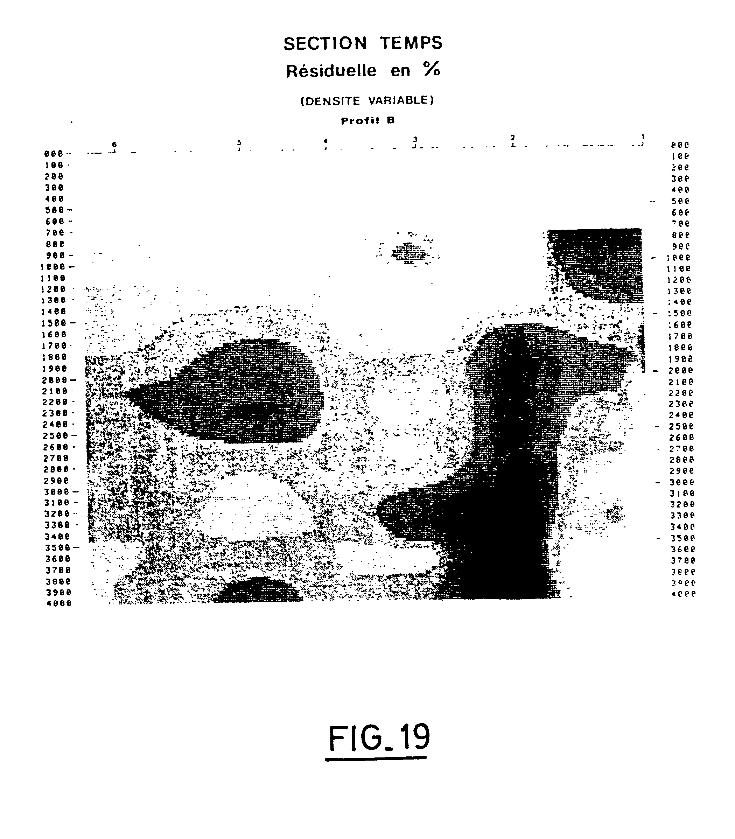

A titre d'illustration, on donne un exemple de représentation figurative. La fig. 18 est un tableau qui comporte en fonction du temps (verticalement) les valeurs résiduelles relatives à six stations alignées suivant un axe dit «profil B». La fig. 19 est une représentation figurative à densité variable réalisée à partir des données de la fig. 19, toujours avec le temps en vertical, et une coordonnée d'espace en horizontal. Les teintes s'échelonnent comme suit du blanc au noir: − 34, − 31, − 21, − 14, − 9, − 5, − 2, 0, 5, 9, 13, 17, 22, 27, 32 et 37.

D'une manière générale, et en particulier pour les fig. 18 à 20, le contenu des dessins est à incorporer à la présente description, comme difficile à décrire intégralement en lui-même.

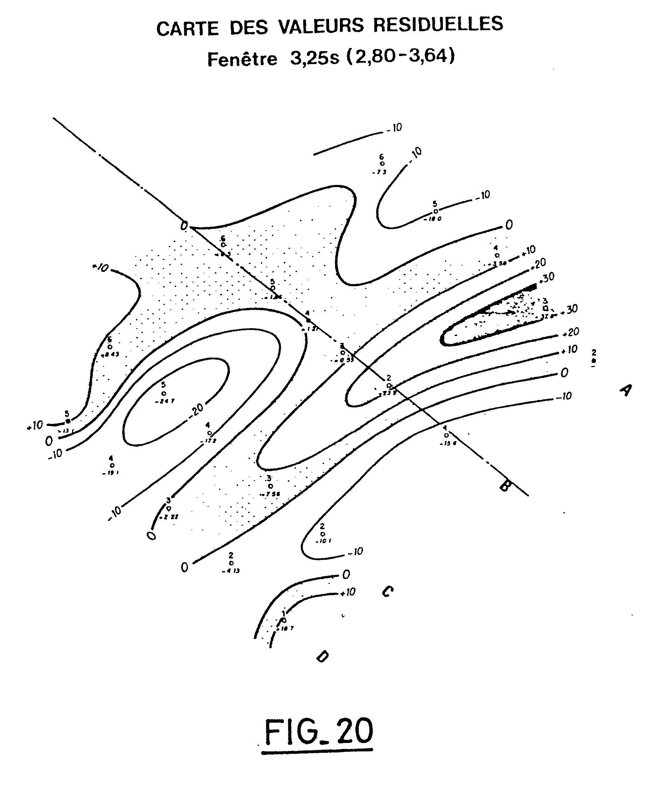

Enfin, la fig. 20 est une carte à deux dimensions, en courbes de niveau, avec grisé pour les valeurs positives, où l'on reconnaît, le long de l'axe en trait mixte, le profil B qui fait l'objet des fig. 18 et 19 (pour le temps 3,25 sec; en l'espèce une fenêtre qui va de 2,80 à 3,64 sec, sur laquelle on fait la moyenne).

Le géophysicien reçoit donc finalement des représentations figuratives du genre de celles des fig. 19 et 20, avec pour mission d'y déceler les réponses susceptibles de correspondre à des anomalies profondes, telles que des couches pétrolifères.

Des essais ont été effectués sur des terrains déjà connus par des forages. (Le procédé selon l'invention est de préférence mis en œuvre sur des terrains dont la structure générale est connue par exploration sismique, mais non nécessairement par des forages). Une bonne corrélation a été obtenue entre les fortes anomalies de valeurs résiduelles positives et les gisements d'huile déjà repérés. Il est estimé que ce résultat favorable tient au soin attaché à la suppression des bruits, selon la présente invention.

Variante préférentielle de l'invention

Le début de la variante préférentielle est le même que précédemment, jusqu'à la représentation numérique lissée RNL de la fig. 17.

Pour le lissage, on utilise par exemple un filtrage par des fonctions cubiques, sur les intervalles de temps délimités par t'1, t'2, t'3, t'4 (fig. 17).

Comme précédemment, il est avantageux de procéder ensuite à une normalisation de la courbe ou représentation numérique lissée.

Les normalisations antérieurement décrites sont utilisables. La demanderesse considère actuellement qu'il est utile, pour faciliter les traitements ultérieurs, de donner à la courbe lissée une variation d'allure monotone, cette courbe étant caractérisée par le fait que toutes ses valeurs sont positives.

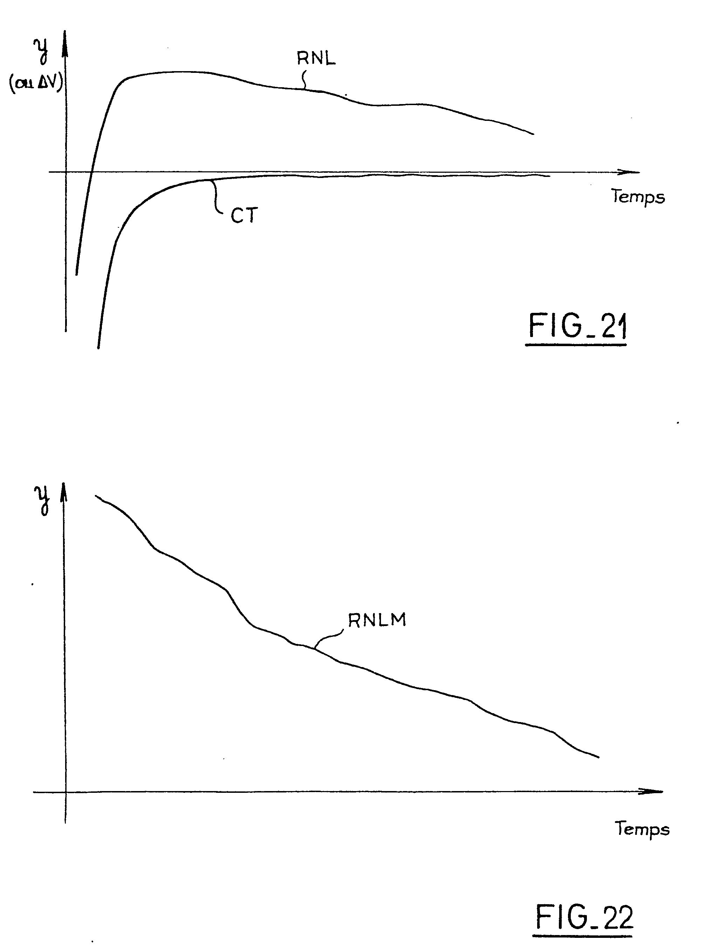

Pour cela, on peut, connaissant un modèle simplifié du sous-sol, tabulaire – c'est-à-dire à couches parallèles –, déterminer numériquement la réponse transitoire de ce sous-sol simplifié d'après le courant d'excitation effectivement utilisé. Illustrée en CT (courbe théorique) sur la fig. 21, cette réponse transitoire théorique du sous-sol simplifié est ramenée à la même échelle que la représentation numérique lissée RNL, de manière connue (par exemple à l'aide de la réponse au créneau de courant lo).

Par différence entre les courbes RNL et CT, on obtient une représentation numérique lissée d'allure monotone RNLM (fig. 22), qui sert de base au traitement proprement dit.

On réalise alors une approximation par exponentielles en différents points de la courbe RNLM de la fig. 22.

C'est-à-dire que l'on recherche une courbe de la forme:

$$a_i \exp \left(- \frac{t}{\tau_i}\right)$$

qui passe au mieux par le point ou échantillon numérique considéré sur la couche RNLM, ainsi que par n échantillons numériques, en amont et de préférence le même nombre d'échantillons numériques en aval. Généralement, on a $1 \leq n \leq 5$, et en pratique n est souvent pris égal à 2.

La courbe exponentielle ainsi définie a naturellement la même pente que la courbe RNLM au point considéré.

Très avantageusement, on associe alors au point concerné la constante de temps $\tau_i$, dont on notera qu'elle est liée à la dérivée logarithmique de la fonction exponentielle ci-dessus (et par conséquent de la courbe RNLM au même point), dérivée logarithmique dont elle est l'inverse, changé de signe.

En pratique, on peut aussi, directement calculer numériquement la dérivée temporelle logarithmique des points – échantillons définissant la courbe RNLM, en utilisant là encore n points de part et d'autre.

D'une manière plus générale, on peut calculer une dérivée simple, toujours avec n points de part et d'autre, ou encore déterminer numériquement d'une autre manière les variations de la pente de la courbe RNLM en fonction du temps, ou bien les variations du rapport pente/amplitude.

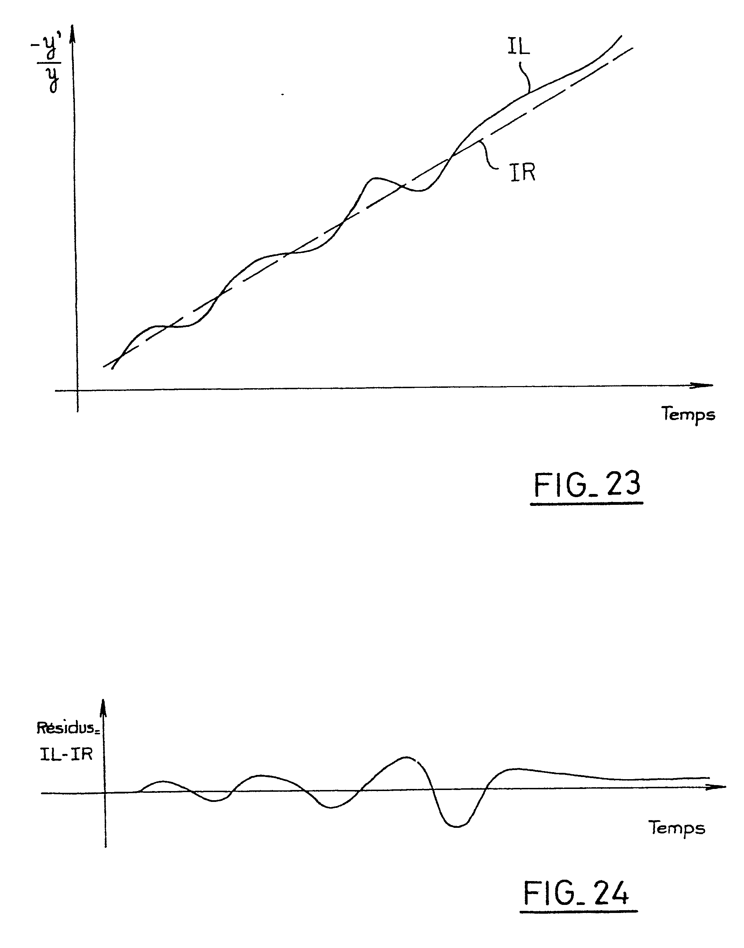

La fig. 23 montre par exemple, en trait plein, l'inverse de la dérivée logarithmique (changée de signe) de la courbe RNLM de la fig. 22. (On prendra dans la suite le cas de l'inverse de la dérivée logarithmique).

Bien entendu, le processus décrit ci-dessus se fait pour plusieurs stations de prospection. Pour chacune d'entre elles, on obtient une courbe de la forme illustrée en trait plein sur la fig. 23; cette courbe, ou plutôt sa représentation numérique, définit une fonction indicatrice locale (IL) pour chaque station.

En considérant les indicatrices locales d'un groupe de stations, on définit selon la présente invention une indicatrice régionale associée à ce groupe de stations, et qui représente le «mode commun» de leurs indicatrices locales. Pour obtenir le «mode commun», on peut simplement faire la moyenne des indicatrices locales prises en considération.

Ce faisant, il a été observé que, pour les dérivées logarithmiques, le logarithme de l'indicatrice régionale peut être sensiblement une parabole (fonction définie par un polynôme du second degré en temps). Ainsi donc, on pourra rechercher le «mode commun» sous la forme de la meilleure fonction d'approximations des indicatrices locales par une fonction du second degré en temps. Le «mode commun» en indicatrice régionale possède par exemple la forme illustrée en trait tireté référencé IR sur la fig. 23.

Ce mode commun peut être considéré comme une «réponse transitoire régionale», de la forme:

$$A \cdot \exp (a \cdot t^2 + b \cdot t + c)$$

compte tenu des observations de la demanderesse.

Si les indicatrices locales sont définies par des dérivées simples ou par une autre fonction des variations, on pourra toujours en trouver le mode commun, éventuellement en recherchant une réponse régionale analogue à celle que l'on vient de décrire.

Comme précédemment indiqué, la réponse régionale peut être prise pour tout ou partie des stations d'exploration. Dans le cas où ces dernières sont disposées géographiquement selon un réseau à deux dimensions, on pourra, de la manière décrite dans la demande de brevet antérieure, rechercher des surfaces géométriques du second degré (suivant des coordonnées d'espace x, y) qui approchent au mieux les courbes locales sur des zones courantes de dimensions choisies.

Quelle que soit la définition des indicatrices locales et régionale, l'opération suivante consiste à faire la différence entre chaque indicatrice locale et l'indicatrice régionale, ce qui donne à chaque fois un résidu dont un exemple est illustré sur la fig. 24.

En prenant, par exemple, une série de stations de prospections alignées, on peut faire une représentation des résidus où l'axe horizontal correspond aux stations, distribuées suivant leur distance, et l'axe vertical à la variable du temps du phénomène transitoire. Sur ce graphique, dit section-temps, sont alors portées des courbes de niveaux ou des points de densité variable en fonction des résidus obtenus selon la présente invention.

On constate que la figure ainsi obtenue ressemble à une structure de sous-sol, pour l'œil du géophysicien.

Des expériences ont été conduites pour des terrains sur lesquels on disposait par ailleurs de section-temps obtenues par prospection géophysique du type sismique réflexion. Des mesures ont également été effectuées selon la présente invention, avec le dispositif de terrain de la fig. 1 (AB = 1500 m; MN = 500 m environ) et une forme d'onde d'excitation selon la fig. 10A. Ces mesures se trouvaient présenter un faible niveau de bruits (bruit tellurique, notamment).

Après l'enregistrement numérique, on a effectué un prétraitement, avec recomposition statistique de la réponse transitoire en chaque station à partir des signaux de mesure élémentaires, puis lissage par filtrage numérique, du type à calcul de la valeur moyenne sur une fenêtre d'intégration courante de largeur constante, puis normalisation par rapport à la réponse transitoire théorique associée à la structure tabulaire simplifiée associée à la section-temps obtenue en sismique réflexion (d'où une représentation numérique du genre RNLM décrit plus haut).

Le traitement a été fait à partir de ces représentations ou courbes RNLM, dont on a pris la dérivée logarithmique, pour obtenir les indicatrices locales associées aux différentes stations. Ensuite a été recherchée une indicatrice régionale, approchant au mieux l'ensemble des indicatrices locales, et de la forme:

$$A \cdot \exp (at^2 + bt + c)$$

Enfin on a déterminé les indicatrices résiduelles par différence entre les indicatrices locales et l'indicatrice régionale.

Une figure en section-temps a alors été faite, de la manière décrite plus haut, puis comparée à la section-temps de sismique réflexion. Dans les deux cas, on retrouvait les mêmes grandes lignes de la structure du sous-sol, avec les failles et autres reliefs à pendage.

L'échelle des distances des sections-temps était bien entendu la même dans les deux cas. Par contre, la demanderesse a observé qu'on obtenait une meilleure correspondance des représentations transitoires et sismiques en utilisant une échelle des temps arithmétique pour le sismique et en racine carrée pour le transitoire.

Le faible niveau de bruit des mesures est considéré comme important pour que la figure finale représente une structure. A cet égard, on utilise avantageusement les moyens de réduction de bruit décrits plus haut:

- dispositifs de terrain spéciaux tels que double dispositif Schlumberger, dipôle-dipôle perpendiculaire avec symétrie, ou dipôle-dipôle magnétique symétrique.
- formes adaptées du courant d'excitation, notamment distribution aléatoire dans le temps, et/ou triplets d'impulsions, et/ou impulsions à deux créneaux très proches de polarité alternée.
- composition statistique et filtrage numérique lissant de qualité, éventuellement en essayant plusieurs filtrages différents.

Outre la normalisation par la réponse théorique du sous-sol simplifié, on pourra utiliser une ou plusieurs des autres normalisations indiquées précédemment.

Pour le traitement selon la variante préférentielle, l'indicatrice régionale peut être recherchée pour un domaine limité contenant une partie seulement des stations de prospection. Bien que la nature de la «régionale» ne soit pas la même ici que dans les modes de réalisation précédents, les moyens de détermination d'une régionale qui y ont été décrits, ou qui sont connus par ailleurs, demeurent applicables à la variante préférentielle.

D'une manière générale toutes les variantes prévues précédemment sont utilisables pour la variante préférentielle.

Par ailleurs, bien qu'une section-temps n'ait qu'une coordonnée d'espace, le traitement selon la présente invention peut se faire sur deux coordonnées d'espace et une coordonnée de temps. L'indicatrice régionale est déterminée sur tout ou partie des stations. Et l'on a finalement une indicatrice résiduelle par station. A partir de là, on peut construire des sections-temps, pour des stations alignées ou presque; sur une carte de la disposition géographique des stations, on peut aussi faire apparaître une valeur du phénomène transitoire: amplitude de l'indicatrice résiduelle pour une valeur donnée du temps par exemple (valeur instantanée ou pondérée).

Bien entendu, l'invention n'est pas limitée aux modes de réalisation décrits, et s'étend à toute variante en accord avec la portée des revendications. On pourra, en particulier, choisir parmi les différentes variantes proposées en fonction de l'intérêt manifesté par le géophysicien pour la représentation figurative finale qui en découle.

**Revendications**

1. Procédé de prospection géophysique du type dans lequel on dispose en coopération avec le sous-sol un dipôle émetteur (AB) ainsi qu'un dipôle récepteur sensible (MN) au champ électromagnétique, on applique répétitivement au dipôle émetteur un courant d'excitation impulsionnel comprenant un groupe ($\pm$ $I_o$; 110, 111; 121, 122) d'impulsions de polarité alternée, suivies chacune par du courant nul, et on détecte répétitivement le signal transitoire ($\Delta V$) qui en résulte à la sortie du dipôle récepteur, pour traiter ensuite les signaux transitoires détectés successifs afin d'obtenir une représentation figurative du phénomène transitoire qui en facilite l'interprétation géophysique, caractérisé en combinaison par le fait que l'on définit des intervalles de temps ($\Delta t$) respectivement consécutifs aux impulsions d'excitation et contemporains du courant nul d'excitation, ces intervalles de temps étant de durée prédéterminée, choisie pour couvrir sensiblement toute la partie utile du phénomène transitoire, que l'on détecte à chaque fois le signal transitoire ($\Delta V$) en fonction du temps au moins pendant ces intervalles de temps, avec échantillonnage, numérisation, et enregistrement temporellement repéré (30) du signal détecté, et que l'opération de traitement commence par un prétraitement, qui comporte l'élaboration d'une représentation numérique brute (fig. 15) du phénomène transitoire en fonction du temps, évaluée statistiquement à partir des éléments de l'enregistrement numérique qui se correspondent temporellement dans les intervalles de temps successifs, puis un filtrage numérique lissant qui fournit une représentation numérique lissée du phénomène transitoire, débarrassée d'une partie substantielle des bruits ambiants (fig. 16; fig. 17).

2. Procédé de prospection géophysique selon la revendication 1, caractérisé par le fait que le courant d'excitation ($\pm I_o$) est répété un grand nombre de fois, que l'on enregistre continuellement sous forme numérique aussi bien le courant d'excitation ($\pm I_o$) que le signal détecté ($\Delta V$), que la durée prédéterminée des intervalles de temps ($\Delta t$) est comprise entre 1 seconde et 20 secondes environ, et que le pas d'échantillonnage est compris entre 2 et 50 millisecondes.

3. Procédé de prospection géophysique selon l'une des revendications 1 et 2, caractérisé par le fait que le courant d'excitation est répété de manière aléatoire (fig. 11; fig. 12).

4. Procédé de prospection géophysique selon l'une des revendications 1 à 3, caractérisé par le fait que le courant d'excitation comprend au moins un triplet d'impulsions de polarité alternée (125, 126).

5. Procédé de prospection géophysique selon l'une des revendications 1 à 4, caractérisé par le fait que, dans chaque groupe, la première impulsion d'excitation comprend deux créneaux de courant de polarité opposée, sensiblement adjacents l'un à l'autre, d'énergie globale nulle, et de durée brève à l'égard de celle de l'intervalle du temps qui la suit, tandis que les impulsions suivantes possèdent la même forme, mais avec une polarité inversée à chaque fois (fig. 13; fig. 14).

6. Procédé de prospection géophysique selon l'une des revendications 1 à 5, dans lequel le dipôle émetteur (AB₁, fig. 5) est un dipôle électrique définissant un axe d'émission (L₁), et le dipôle

récepteur ($M_1N_1$) est un autre dipôle électrique placé sur un axe de réception ($L_2$) parallèle à l'axe d'émission, voisin du dipôle émetteur, et plus court que lui, caractérisé par le fait que l'on dispose sur l'axe d'émission un second dipôle électrique émetteur ($AB_2$), sensiblement adjacent au premier, et de même longueur que lui, les deux dipôles émetteurs étant ainsi symétriques l'un de l'autre par rapport à un axe (P), perpendiculaire à l'axe d'émission, que l'on applique simultanément (11, 12) aux deux dipôles émetteurs des courants d'excitation sensiblement égaux et de polarité opposée, que l'on dispose sur l'axe de réception un second dipôle électrique récepteur ($M_2N_2$) symétrique du premier par rapport audit axe de symétrie (P) et que l'on détecte simultanément (30) les signaux apparaissent aux bornes des deux dipôles récepteurs, l'addition à chaque instant, des deux signaux détectés, avec des polarités opposées, permettant de réduire sensiblement l'effet des bruits électriques ambiants sur les signaux transitoires utiles.

7. Procédé de prospection géophysique selon la revendication 6, caractérisé par le fait qu'au moins un dipôle magnétique ($H_1$, $H_2$) est disposé au voisinage de chacun des dipôles électriques récepteurs, ces dipôles magnétiques étant aussi symétriques par rapport audit axe de symétrie (P).

8. Procédé de prospection géophysique selon l'une des revendications 1 à 5, dans lequel le dispositif émetteur est un dipôle électrique (AB, fig. 6) et le dipôle récepteur ($M_1N_1$) un autre dipôle électrique plus court, et d'axe ($L_2$) perpendiculaire à celui ($L_1$) du dipôle émetteur, l'intersection des axes des deux dipôles étant voisine d'une extrémité (B) du dipôle émetteur, caractérisé par le fait que l'on place un second dipôle électrique récepteur ($M_2N_2$) symétrique du premier ($M_1N_1$) par rapport à l'axe ($L_1$) du dipôle émetteur, et que l'on détecte simultanément (30) les signaux apparaissant aux bornes des deux dipôles récepteurs, l'addition à chaque instant des deux signaux détectés avec des polarités opposées permettant de réduire sensiblement l'effet des bruits électriques ambiants sur les signaux transitoires utiles.

9. Procédé de prospection géophysique selon l'une des revendications 1 à 5, dans lequel le dispositif émetteur comprend un dipôle électrique (AB) et le dispositif récepteur comprend un dipôle magnétique ($H_1$) voisin du dipôle électrique émetteur, entre ses extrémités, caractérisé par le fait que l'on place un second dipôle magnétique ($H_2$) symétrique du premier par rapport à l'axe ($L_1$) du dipôle émetteur, et que l'on détecte simultanément (30) les signaux apparaissant aux bornes des deux dipôles magnétiques, l'addition à chaque instant des deux signaux détectés avec des polarités opposées permettant de réduire sensiblement l'effet des bruits électriques ambiants sur les signaux transitoires utiles.

10. Procédé de prospection géophysique selon l'une des revendications 1 à 9, caractérisé par le fait que l'opération de filtrage lissant est suivie d'une opération de normalisation, qui fournit une représentation numérique lissée et normalisée.

11. Procédé de prospection géophysique selon la revendication 10, caractérisé par le fait que l'opération de normalisation comprend le calcul de l'opérateur mathématique faisant passer du courant d'émission employé à un courant-type prédéfini, puis la convolution de la représentation numérique lissée par cet opérateur.

12. Procédé de prospection géophysique selon la revendication 10, caractérisé par le fait que l'opération de normalisation comprend le calcul d'une courbe théorique représentant le champ électromagnétique transitoire que créerait le courant d'émission pour un sous-sol simplifié, et la soustraction, à la représentation numérique lissée, d'une représentation correspondante de cette courbe théorique.

13. Procédé de prospection géophysique selon la revendication 10, caractérisé par le fait que l'opération de normalisation comprend le calcul de l'aire totale de la courbe définie par la représentation numérique lissée, puis, en chaque point de cette dernière, la détermination d'une nouvelle valeur égale au rapport de l'aire partielle sur une fenêtre prédéterminée entourant ce point à l'aire totale.

14. Procédé de prospection géophysique selon l'une des revendications 10 à 13, caractérisé par le fait que le traitement comprend une approximation par exponentielles de la courbe définie par la représentation numérique lissée et normalisée, les exponentielles étant de la forme a. $e^{-t/\tau}$, où a est un coefficient, $\tau$ une constante de temps, et t la variable de temps.

15. Procédé de prospection géophysique selon la revendication 14, caractérisé par le fait que l'approximation par exponentielles comporte la détermination d'une combinaison linéaire de plusieurs exponentielles, de constantes de temps différentes, approchant ladite courbe.

16. Procédé de prospection géophysique selon la revendication 14, caractérisé par le fait que l'approximation par exponentielles comporte, en divers points de ladite courbe, la détermination de la meilleure exponentielle approchant la courbe au voisinage de chacun de ces points.

17. Procédé de prospection géophysique selon l'une des revendications 14 à 16, caractérisé par le fait que la représentation figurative finale destinée au géophysicien fait intervenir au moins un paramètre des exponentielles, choisi parmi le coefficient a et la constante de temps $\tau$.

18. Procédé de prospection géophysique selon l'une des revendications 10 à 17, dans lequel on répète l'ensemble des opérations avec implantation du dispositif émetteur-récepteur successivement en différentes stations d'une zone à prospecter, ce qui donne une pluralité de représentations numériques locales, lissées et normalisées, qui définissent des courbes locales, respectivement associées aux différentes stations, caractérisé par le fait que le traitement comporte la détermination numérique d'une courbe régionale, à partir de l'ensemble des courbes locales, puis la détermination d'une pluralité de représentations numériques résiduelles, par différence entre les courbes locales et la courbe régionale.

19. Procédé de prospection géophysique selon la revendication 18, caractérisé par le fait que la courbe régionale est établie en fonction du temps, pour une pluralité de stations sensiblement alignées.

20. Procédé de prospection géophysique selon la revendication 18, caractérisé par le fait que la courbe régionale est établie spatialement, à temps constant, pour une pluralité de stations réparties sur une zone à deux dimensions.

21. Procédé de prospection géophysique selon l'une des revendications 18 à 20, caractérisé par le fait que la détermination numérique de la courbe régionale comporte la recherche de surfaces géométriques du second degré, approchant les courbes locales sur des zones courantes de dimensions choisies.

22. Procédé de prospection géophysique selon l'une des revendications 18 et 19, prises en dépendance de la revendication 13, caractérisé par le fait que la détermination numérique de la courbe régionale comporte le calcul de moyennes simples sur les points qui se correspondent dans les différentes courbes locales.

23. Procédé de prospection géophysique selon l'une des revendications 18 à 22, caractérisé par le fait que la représentation figurative finale destinée au géophysicien fait intervenir au moins une valeur numérique de chaque représentation numérique résiduelle.

24. Procédé de prospection géophysique selon l'une des revendications 1 à 23, caractérisé par le fait que la représentation est en forme de carte, illustrant une valeur numérique définie à un instant donné, pour une pluralité de stations de prospection distribuées sur une zone de terrain à deux dimensions (fig. 20).

25. Procédé de prospection géophysique selon l'une des revendications 1 à 23, caractérisé par le fait que la représentation est en forme de section-temps, illustrant, pour une pluralité de stations sensiblement alignées, la variation en fonction du temps du paramètre représenté (fig. 19).

26. Procédé de prospection géophysique selon l'une des revendications 1 à 25, caractérisé par le fait que la représentation comporte une illustration graphique sous forme de points de densité variable (fig. 19).

27. Procédé de prospection géophysique selon l'une des revendications 1 à 26, caractérisé par le fait que le traitement comprend ensuite les étapes suivantes:
- pour chaque réponse transitoire locale, c'est-à-dire associée à une station de prospection, ainsi composée, déterminer une fonction indicatrice locale (IL, fig. 23) liée aux variations de la pente de la réponse transitoire en fonction du temps;
- pour plusieurs stations de prospection, déterminer une fonction indicatrice régionale (IR, fig. 23) représentant en fonction du temps le «mode commun» des fonctions indicatrices locales respectivement associées aux stations concernées;
- déterminer des indicatrices résiduelles (IL–IR, fig. 24) pour chacune des stations concernées, par soustraction de l'indicatrice régionale à chacune des indicatrices locales; et
- représenter ces indicatrices résiduelles en fonction de la position géographique des stations concernées, ce qui donne une représentation de certains traits de la structure du sous-sol.

28. Procédé de prospection géophysique selon la revendication 27, caractérisé par le fait qu'après le prétraitement qui comporte la composition statistique, en une représentation numérique brute, du phénomène transitoire des réponses répétitivement enregistrées pour chacune des stations, puis un filtrage numérique lissant, qui fournit une représentation numérique lissée du phénomène transitoire, et avant les opérations de traitement précitées, on effectue une normalisation de la représentation lissée (RNL, fig. 21), en lui soustrayant une courbe théorique (CT, fig. 21) représentant le champ électromagnétique transitoire que créerait le courant d'émission pour un sous-sol simplifié, ce qui donne une représentation numérique lissée normalisée (RNLM, fig. 22).

29. Procédé de prospection géophysique selon l'une des revendications 27 et 28, caractérisé par le fait que la détermination des fonctions indicatrices locales comprend le calcul de la dérivée temporelle de chacune des réponses transitoires.

30. Procédé de prospection géophysique selon l'une des revendications 27 à 29, caractérisé par le fait que la détermination des fonctions indicatrices locales comprend la détermination de rapports entre la pente de la réponse transitoire et l'amplitude de cette même réponse transitoire.

31. Procédé de prospection géophysique selon l'une des revendications 27 à 30, caractérisé par le fait que la détermination des fonctions indicatrices locales comprend le calcul de la dérivée logarithmique de chacune des réponses transitoires.

32. Procédé de prospection géophysique selon l'une des revendications 27 à 31, caractérisé par le fait que la fonction indicatrice régionale est déterminée sous la forme d'une exponentielle.

33. Procédé de prospection géophysique selon l'une des revendications 27 à 32, caractérisé par le fait que l'indicatrice régionale est assimilée à une exponentielle dont l'argument est un polynôme du second degré en fonction du temps.

34. Procédé de prospection géophysique selon l'une des revendications 27 à 33, caractérisé par le fait que la représentation finale, sous forme de figure dite section-temps, est faite avec une échelle de temps exprimée en racine carrée de la coordonnée de temps du phénomène transitoire.

35. Procédé de prospection géophysique selon l'une des revendications 27 à 34, dans lequel les fonctions indicatrices locales sont du type rapports pente-amplitude de la réponse transitoire, caractérisé par le fait que la représentation finale porte sur l'inverse de ces rapports.

36. Procédé de prospection géophysique selon l'une des revendications 27 à 34, caractérisé par le fait que la pente de la réponse transitoire en un point donné est déterminée en recherchant une exponentielle passant au mieux par ce point, et par n points voisins d'un côté, ainsi que de l'autre côté, avec n de préférence inférieur ou égal à 5.

**Claims**

1. A geophysical prospection process of the type in which there is used in conjunction with the subsoil a dipole transmitter (AB) and a dipole receiver sensitive (MN) to the electromagnetic field, a pulsed excitation current is applied repetitively to the dipole transmitter, said current comprising a group ($\pm I_o$; 110, 111; 121, 122) of pulses of alternate polarity, each followed by zero current, and the resulting transient signal ($\Delta V$) at the output of the dipole receiver is detected repetitively in order then to process the successive detected transient signals in order to obtain a figurative representation of the transient phenomenon, which facilitates the geophysical interpretation thereof, characterised in combination in that intervals of time ($\Delta t$) respectively consecutive to the excitation pulses and contemporaneous with the zero excitation current are defined, these intervals of time being of a predetermined duration selected to cover substantially the entire useful part of the transient phenomenon, the transient signal ($\Delta V$) is detected each time as a function of the time at least during said intervals of time, which sampling, digitalization, and time-logged recording (30) of the detected signal, and the processing operation starts with a pre-processing which comprises producing a gross digital representation (Fig. 15) of the transient phenomenon as a function of time, evaluated statistically from the elements of the digital recording coinciding in time in the successive time intervals, followed by a smoothing digital filtering which provides a smoothed digital representation of the transient phenomenon devoid of a substantial proportion of the ambient noise (Fig. 16; Fig. 17).

2. A geophysical prospection process according to claim 1, characterised in that the excitation current ($\pm I_o$) is repeated a large number of times, both the excitation current ($\pm I_o$) and the detected signal ($\Delta V$) are continously recorded in digital form, the predetermined duration of the intervals of time ($\Delta t$) is between 1 second and 20 seconds approximately, and the sampling pitch is between 2 and 50 milliseconds.

3. A geophysical prospection process according to claim 1 or 2, characterised in that the excitation current is repeated in random fashion (Fig. 11; Fig. 12).

4. A geophysical prospection process according to any one of claims 1 to 3, characterised in that the excitation current comprises at least one triplet of pulses of alternate polarity (125, 126).

5. A geophysical prospection process according to any one of claims 1 to 4, characterised in that in each group the first excitation pulse comprises two current peaks of opposite polarity substantially adjacent one another, of zero total energy and of short duration with respect to that of the interval of time following it, while the following pulses have the same form but with reverse polarity each time (Fig. 13; Fig. 14).

6. A geophysical prospection process according to any one of claims 1 to 5, in which the dipole transmitter ($AB_1$, Fig. 5) is an electrical dipole defining a transmission axis ($L_1$) and the dipole receiver ($M_1N_1$) is another electrical dipole disposed on a receiving axis ($L_2$) parallel to the transmission axis and adjacent the dipole transmitter and shorter than the latter, characterised in that a second electrical dipole transmitter ($AB_2$) is disposed on the transmission axis substantially adjacent the first transmitter and of the same length as the latter, the two dipole transmitters thus being symmetrical to one another with respect to an axis (P) perpendicular to the transmission axis, substantially equal and opposite polarity excitation currents are applied simultaneously (11, 12) to the two dipole transmitters, a second electrical dipole receiver ($M_2N_2$) is disposed on the receiving axis and is symmetrical with the first receiver with respect to said axis of symmetry (P) and the signals at the terminals of the two dipole receivers are detected simultaneously (30), addition of the two signals detected with opposite polarities at each moment allowing the effect of the ambient electrical noise on the useful transient signals to be substantially reduced.

7. A geophysical prospection process according to claim 6, characterised in that at least one magnetic dipole ($H_1$, $H_2$) is disposed near each of the electrical dipole receivers, said magnetic dipoles also being symmetrical with respect to the axis of symmetry (P).

8. A geophysical prospecting process according to any one of claims 1 to 5, in which the transmitter is an electrical dipole (AB, Fig. 6) and the dipole receiver ($M_1N_1$) is another shorter electrical dipole having the axis ($L_2$) perpendicular to the axis ($L_1$) of the dipole transmitter, the intersection of the axes of the two dipoles being near one end (B) of the dipole transmitter, characterised in that a second electrical dipole receiver ($M_2N_2$) symmetrical with the first ($M_1N_1$) with respect to the axis ($L_1$) of the dipole transmitter is provided and the signals at the terminals of the two dipole receivers are detected simultaneously (30), the addition of the two signals detected with opposite polarities at each moment allowing the effect of the ambient electrical noise on the useful transient signals to be substantially reduced.

9. A geophysical prospection process according to any one of claims 1 to 5, in which the transmitter comprises an electrical dipole (AB) and the receiver comprises a magnetic dipole ($H_1$) near the electrical dipole transmitter, between its ends, characterised in that a second magnetic dipole ($H_2$) symmetrical with the first with respect to the axis ($L_1$) of the dipole transmitter is provided and the signals appearing at the terminals of the two magnetic dipoles are detected simultaneously (30), the addition of the two signals detected with opposite polarities at each moment allowing the effect of the ambient electrical noise on the useful transient signals to be substantially reduced.

10. A geophysical prospection process according to any one of claims 1 to 9, characterised in that the smoothing filtration operation is followed by a standardization operation which provides a smoothed and standardized digital representation.

11. A geophysical prospection process according to claim 10, characterised in that the standardization operation comprises calculation of the mathematical operator causing the change from the transmission current used to a predefined type-current, followed by convolution of the smoothed digital representation by said operator.

12. A geophysical prospection process according to claim 10, characterised in that the standardization operation comprises calculation of a theoretical curve representing the transient electromagnetic field which would be created by the transmission current for a simplified subsoil and the subtraction, from the smoothed digital representation, of a corresponding representation of this theoretical curve.

13. A geophysical prospection process according to claim 10, characterised in that the standardization operation comprises the calculation of the total area of the curve defined by the smoothed digital representation followed, at each point of the latter, by determination of a new value equal to the ratio of the partial area over a predetermined window surrounding this point to the total area.

14. A geophysical prospection process according to any one of claims 10 to 13, characterised in that the processing comprises an approximation, by exponentials, of the curve defined by the smoothed and standardized digital representation, the exponentials being of the form $a \cdot e^{-t/\tau}$, where a is a coefficient, $\tau$ is a time constant and t the time variable.

15. A geophysical prospection process according to claim 14, characterised in that the approximation by exponentials comprises the determination of a linear combination of a number of exponentials of different time constants approaching said curve.

16. A geophysical prospecting process according to claim 14, characterised in that the approximation by exponentials comprises, at various points of said curve, the determination of the best exponential approaching the curve near each of these points.

17. A geophysical prospection process according to any one of claims 14 to 16, characterised in that the final figurative representation intended for the geophysicist makes use of at least one parameter of the exponentials selected from the coefficient a and the time constant $\tau$.

18. A geophysical prospection process according to any one of claims 10 to 17, in which all the operations are repeated with the transmitter-receiver system successively located at different stations of the zone under prospection, to give a plurality of local smoothed and standardized digital representations which define local curves associated with the different stations respectively, characterised in that the processing comprises the digital determination of a regional curve from all the local curves followed by the determination of a plurality of residual digital representations by the difference between the local curves and the regional curve.

19. A geophysical prospection process according to claim 18, characterised in that the regional curve is established as a function of time for a plurality of substantially aligned stations.

20. A geophysical prospection process according to claim 18, characterised in that the regional curve is established spatially at a constant time for a plurality of stations distributed over a two-dimensional zone.

21. A geophysical prospection process according to any one of claims 18 to 20, characterised in that the digital determination of the regional curve comprises locating geometrical surfaces of the second degree approaching the local curves on current zones of selected dimensions.

22. A geophysical prospection process according to claim 18 or 19 taken in dependence on claim 13, characterised in that the digital determination of the regional curve comprises calculation of simple averages on the points which correspond in the different local curves.

23. A geophysical prospection process according to any one of claims 18 to 22, characterised in that the final figurative representation intended for the geophysicist makes use of at least one digital value of each residual digital representation.

24. A geophysical prospection process according to any one of claims 1 to 23, characterised in that the representation is in the form of a map illustrating a defined digital value at a given time for a plurality of prospection stations distributed over a two-dimensional land zone (Fig. 20).

25. A geophysical prospection process according to any one of claims 1 to 23, characterised in that the representation is in the form of time sections illustrating the variation as a function of time, of the parameter represented, for a plurality of substantially aligned stations (Fig. 19).

26. A geophysical prospection process according to any one of claims 1 to 25, characterised in that the representation comprises a graphic illustration in the form of points of variable density (Fig. 19).

27. A geophysical prospection process according to any one of claims 1 to 26, characterised in that the processing then comprises the following stages:

(a) For each local transient response, i.e. associated with a prospection station, thus composed, determining a local indicative function (IL, Fig. 23) linked to the variations in the slope of the transient response as a function of time;

(b) For a plurality of prospection stations, determination of a regional indicative function (IR, Fig. 23), representing as a function of time the «common mode» of the local indicative functions respectively associated with the stations concerned;

(c) Determination of the residual indicators (IL–IR, Fig. 24) for each of the stations concerned, by subtracting the regional indicator from each of the local indicators; and

(d) Representing these residual indicators as a function of the geographical position of the stations concerned, thus giving a representation of certain features of the structure of the subsoil.

28. A geophysical prospection process according to claim 27, characterised in that after the pre-processing comprising the statistical composition and a gross digital representation, of the transient phenomenon of the responses repetitively recorded for each of the stations, followed by smoothing digital filtration which gives a smoothed digital representation of the transient phenomenon, and before the said processing operations, the smoothed representation (RNL, Fig. 21) is standardized by subtracting therefrom a theoretical curve (CT, Fig. 21) representing the transient electromagnetic field that would be created by the transmission current for a simplified subsoil, thus giving a standardized smoothed digital representation (RNLM, Fig. 22).

29. A geophysical prospection process according to claim 27 or 28, characterised in that the determination of the local indicative functions comprises calculation of the time derivative of each of the transient responses.

30. A geophysical prospection process according to any one of claims 27 to 29, characterised in that determination of the local indicative functions comprises determination of ratios between the slope of the transient response and the amplitude of the same transient response.

31. A geophysical prospection process according to any one of claims 27 to 30, characterised in that determination of the local indicative functions comprises calculation of the logarithmic derivative of each of the transient responses.

32. A geophysical prospection process according to any one of claims 27 to 31, characterised in that the regional indicative function is determined in the form of an exponential.

33. A geophysical prospection process according to any one of claims 27 to 32, characterised in that the regional indicator is equivalent to an exponential, the argument of which is a second degree polynomial as a function of time.

34. A geophysical prospection process according to any one of claims 27 to 33, characterised in that the final representation in the form of a time section figure is made with a time scale expressed as the square root of the time coordinate of the transient phenomenon.

35. A geophysical prospection process according to any one of claims 27 to 34, in which the local indicative functions are of the transient response slope-amplitude ratio type, characterised in that the final representation is based on the reciprocal of these ratios.

36. A geophysical prospection process according to any one of claims 27 to 34, characterised in that the slope of the transient response at a given point is determined by finding the exponential which best passes through said point, and through n points near one side, and on the other side, with n preferably being less than or equal to 5.

**Patentansprüche**

1. Verfahren zur geophysikalischen Prospektion, wobei man in Verbindung mit dem Untergrund einen Dipol-Sender (AB) und einen Dipol-Empfänger (MN), welcher auf das elektromagnetische Feld anspricht, anordnet, und wiederholt an dem Dipol-Sender einen gepulsten Erregerstrom anlegt, der eine Gruppe ($\pm I_o$; 110, 111; 121, 122) von Impulsen abwechselnder Polarität umfasst, jeweils gefolgt von einem Nullstrom, und wobei man wiederholt das Übergangssignal ($\Delta V$) feststellt, das sich daraus am Ausgang des Empfänger-Dipols ergibt, um anschliessend die nacheinander empfangenen Übergangssignale zu behandeln, um eine bildliche Darstellung des Übergangsphänomens zu erhalten, welche eine geophysikalische Interpretation erleichtert, gekennzeichnet durch die Kombination der Massnahmen, dass Zeitintervalle ($\Delta t$) definiert werden, die jeweils auf die Erregerimpulse folgen und mit den Nullstromphasen zusammenfallen, wobei diese Zeitintervalle von vorbestimmter Länge sind und so gewählt sind, dass sie im wesentlichen den ganzen auswertbaren Teil des Übergangsphänomens abdecken, dass man jedesmal das Übergangssignal ($\Delta V$) in Abhängigkeit von der Zeit wenigstens während dieser Zeitintervalle feststellt, und zwar mit Signalabtastung, Digitalisierung und zeitlich begrenzter Registrierung (30) des aufgenommenen Signals, und dass die Datenverarbeitung mit einer Vorbehandlung beginnt, welche die Erstellung einer rohen, numerischen Darstellung (Fig. 15) des Übergangsphänomens als Funktion der Zeit umfasst, welche statistisch ermittelt ist aus den numerisch registrierten Werten, welche sich in den aufeinanderfolgenden Zeitintervallen zeitlich entsprechen, und dass die Vorbehandlung eine numerische Glättungsfilterung umfasst, welche eine numerisch geglättete Darstellung des Übergangsphänomens liefert, welche von einem wesentlichen Teil der Rauscheffekte befreit ist (Fig. 16, 17).

2. Verfahren zur geophysikalischen Prospektion nach Anspruch 1, dadurch gekennzeichnet, dass der Erregerstrom ($\pm I_o$) vielfach wiederholt wird, dass man kontinuierlich in digitaler Form sowohl den Erregerstrom ($\pm I_o$) wie das festgestellte Signal (V) registriert, dass die vorbestimmte Dauer der Zeitintervalle (t) zwischen ungefähr 1 und 20 Sekunden liegt und dass das Intervall für die Signalabtastung zwischen 2 und 50 Millisekunden liegt.

3. Verfahren zur geophysikalischen Prospektion nach einem der Ansprüche 1 oder 2, dadurch gekennzeichnet, dass der Erregerstrom sich in Zufallsfolge wiederholt (Fig. 11; Fig. 12).

4. Verfahren zur geophysikalischen Prospektion nach einem der Ansprüche 1 bis 3, dadurch gekennzeichnet, dass der Erregerstrom wenigstens ein Triplet von Impulsen abwechselnder Polarität umfasst (125, 126).

5. Verfahren zur geophysikalischen Prospektion nach einem der Ansprüche 1 bis 4, dadurch gekennzeichnet, dass in jeder Gruppe der erste Erregerimpuls zwei Rechteckszacken entgegengerichteter Polarität umfasst, die im wesentlichen aneinanderliegen, deren Gesamtenergie Null ist und deren Dauer kurz ist im Vergleich zum darauf folgenden Zeitintervall, und dass die folgenden Impulse dieselbe Form aufweisen, aber mit jedesmal umgekehrter Polarität (Fig. 13; Fig. 14).

6. Verfahren zur geophysikalischen Prospektion nach einem der Ansprüche 1 bis 5, wobei der Sender-Dipol (AB₁, Fig. 5) ein elektrischer Dipol ist, der eine Emissionsachse (L₁) definiert, und der Empfänger-Dipol (M₁N₁) ein anderer elektrischer Dipol ist, der sich auf einer Empfangsachse (L₂) befindet, welche parallel zur Emissionsachse liegt, und welcher dem Sende-Dipol benachbart ist und kürzer ist als dieser, dadurch gekennzeichnet, dass man auf die Emissionsachse einen zweiten elektrischen Sende-Dipol (AB₂) setzt, welcher im wesentlichen dem ersten benachbart ist und die gleiche Länge wie dieser aufweist, wobei die beiden Sende-Dipole zu einer Achse (P) symmetrisch sind, die zur Emissionsachse normal liegt, dass man gleichzeitig (11, 12) an die beiden Sende-Dipole im wesentlichen gleiche Erregerströme legt, welche umgekehrte Polarität aufweisen, und dass man auf der Empfängerachse einen zweiten elektrischen Empfänger-Dipol (M₂N₂) anordnet, welcher zum ersten in bezug auf die erwähnte Symmetrieachse (P) symmetrisch liegt, dass man gleichzeitig (30) die Signale feststellt, die an den Ausgängen der beiden Empfänger-Dipole erscheinen, wobei die jederzeitige Addition der beiden festgestellten Signale, die umgekehrte Polarität aufweisen, es erlaubt, den Einfluss von elektrischen Rauscheffekten auf die auswertbaren Übergangssignale wesentlich zu reduzieren.

7. Verfahren zur geophysikalischen Prospektion nach Anspruch 6, dadurch gekennzeichnet, dass wenigstens ein magnetischer Dipol (H₁, H₂) in der Nachbarschaft jedes elektrischen Empfänger-Dipols angeordnet ist, wobei auch diese magnetischen Dipole symmetrisch zur erwähnten Symmetrieachse (P) liegen.

8. Verfahren zur geophysikalischen Prospektion nach einem der Ansprüche 1 bis 5, wobei die Sendeeinrichtung ein elektrischer Dipol (AB, Fig. 6) ist und der Empfänger-Dipol (M₁N₁) ein anderer kürzerer elektrischer Dipol, dessen Achse (L₂) normal zu jener (L₁) des Sende-Dipols steht, und die Achsen der zwei Dipole sich in der Nähe eines Endes (B) des Sende-Dipols schneiden, dadurch gekennzeichnet, dass ein zweiter elektrischer Empfänger-Dipol (M₂N₂), der zum ersten (M₁N₁) symmetrisch liegt, mit Bezug auf die Achse des Sende-Dipols, vorgesehen wird und dass man gleichzeitig (30) die Signale feststellt, die an den Ausgängen der beiden Empfänger-Dipole erscheinen, wobei die jederzeitige Addition der beiden festgestellten Signale mit ihren entgegengesetzten Polaritäten es erlaubt, wesentlich den Effekt elektrischen Rauschens auf die verwertbaren Übergangssignale zu reduzieren.

9. Verfahren zur geophysikalischen Prospektion nach einem der Ansprüche 1 bis 5, wobei die Sendeeinrichtung einen elektrischen Dipol (AB) umfasst und die Empfangseinrichtung zwischen ihren Enden einen magnetischen Dipol (H₁) umfasst, der dem elektrischen Sende-Dipol benachbart ist, dadurch gekennzeichnet, dass ein zweiter magnetischer Dipol (H₂) symmetrisch zum ersten in bezug auf die Achse (L₁) des Sende-Dipols angeordnet wird und dass man gleichzeitig (30) die Signale feststellt, die an den Ausgängen der beiden magnetischen Dipole erscheinen, wobei die jederzeitige Addition der entdeckten Signale mit ihren entgegengesetzten Polaritäten es erlaubt, den Effekt des elektrischen Rauschens auf die verwertbaren Übergangssignale wesentlich zu reduzieren.

10. Verfahren zur geophysikalischen Prospektion nach einem der Ansprüche 1 bis 9, dadurch gekennzeichnet, dass die Operation der Glättungsfilterung durch eine Normalisierungsoperation gefolgt ist, welche eine numerische Darstellung liefert, die sowohl geglättet wie normalisiert ist.

11. Verfahren zur geophysikalischen Prospektion nach Anspruch 10, dadurch gekennzeichnet, dass der Normalisierungsschritt die Berechnung eines mathematischen Operators umfasst, welcher den verwendeten Emissionsstrom in einen Strom vordefinierter Art verwandelt, und dass anschliessend die geglättete, numerische Darstellung mit diesem Operator umgesetzt wird.

12. Verfahren zur geophysikalischen Prospektion nach Anspruch 10, dadurch gekennzeichnet, dass der Normalisierungsschritt die Berechnung einer theoretischen Kurve umfasst, die dem elektromagnetischen Übergangsfeld entspricht, welches der Emissionsstrom für einen vereinfachten Untergrund erzeugen würde und die Subtraktion einer entsprechenden Darstellung dieser theoretischen Kurve von der geglätteten numerischen Darstellung.

13. Verfahren zur geophysikalischen Prospektion nach Anspruch 10, dadurch gekennzeichnet, dass der Normalisierungsschritt die Berechnung der Gesamtfläche der durch die geglättete numerische Darstellung definierten Kurve umfasst und daraufhin an jedem Punkt der letzteren die Bestimmung eines neuen Wertes, welcher gleich ist dem Verhältnis der Partialfläche eines Ausschnittes in einer vorbestimmten Umgebung des Punktes zur Gesamtfläche.

14. Verfahren zur geophysikalischen Prospektion nach einem der Ansprüche 10 bis 13, dadurch gekennzeichnet, dass die Datenverarbeitung eine exponentielle Approximation der Kurve umfasst, die durch die geglättete und normalisierte numerische Darstellung definiert ist, wobei die Exponentialfunktionen von der Form $a \cdot e^{-t/\tau}$ sind, wobei a

ein Koeffizient, τ eine Zeitkonstante und t die Zeitvariable ist.

15. Verfahren zur geophysikalischen Prospektion nach Anspruch 14, dadurch gekennzeichnet, dass die exponentielle Approximation die Bestimmung einer linearen Kombination von mehreren Exponentialkurven mit verschiedenen Zeitkonstanten umfasst, welche die genannte Kurve approximiert.

16. Verfahren zur geophysikalischen Prospektion nach Anspruch 14, dadurch gekennzeichnet, dass die exponentielle Approximation die Bestimmung der besten exponentiellen Annäherung an verschiedenen Punkten der genannten Kurve umfasst, welche die Kurve in der Nachbarschaft jedes dieser Punkte approximiert.

17. Verfahren zur geophysikalischen Prospektion nach einem der Ansprüche 14 bis 16, dadurch gekennzeichnet, dass die schliessliche bildliche Darstellung, die für den Geophysiker bestimmt ist, wenigstens einen Parameter der Exponentialfunktionen aufscheinen lässt, welche entweder der Koeffizient a oder die Zeitkonstante τ sein kann.

18. Verfahren zur geophysikalischen Prospektion nach einem der Ansprüche 10 bis 17, wobei man die Gesamtheit des Verfahrens wiederholt unter sukzessiver Einpflanzung der Sende- und Empfangseinrichtung an verschiedenen Stellen einer zu untersuchenden Zone, was eine Vielzahl von lokalen numerischen Darstellungen, die geglättet und normalisiert sind, liefert, welche lokale Kurven definieren, die den verschiedenen Stationen entsprechen, dadurch gekennzeichnet, dass die Datenverarbeitung die zahlenmässige Bestimmung einer regionalen Kurve umfasst, welche von der Gesamtheit der lokalen Kurven hergeleitet wird, sowie die Bestimmung einer Mehrzahl von numerischen Restdarstellungen durch Differenzbildung zwischen den lokalen Kurven und der regionalen Kurve.

19. Verfahren zur geophysikalischen Prospektion nach Anspruch 18, dadurch gekennzeichnet, dass die regionale Kurve in Abhängigkeit von der Zeit dargestellt ist, und zwar für eine Mehrzahl von Stationen, die im wesentlichen auf einer Geraden liegen.

20. Verfahren zur geophysikalischen Prospektion nach Anspruch 18, dadurch gekennzeichnet, dass die regionale Kurve räumlich festgelegt wird zu einem gegebenen Zeitpunkt für eine Mehrzahl von Stationen, die in einem zweidimensionalen Bereich angeordnet sind.

21. Verfahren zur geophysikalischen Prospektion nach einem der Ansprüche 18 bis 20, dadurch gekennzeichnet, dass die numerische Festlegung der regionalen Kurve das Aufsuchen von geometrischen Flächen zweiten Grades umfasst, von dem die lokalen Kurven in Bereichen von gewählten Abmessungen approximiert werden.

22. Verfahren zur geophysikalischen Prospektion nach einem der Ansprüche 18 und 19, in Abhängigkeit vom Anspruch 13, dadurch gekennzeichnet, dass die numerische Bestimmung der regionalen Kurve die Berechnung einfacher Mittelwerte umfasst, welche über jene Punkte erfolgt, die sich in den verschiedenen lokalen Kurven entsprechen.

23. Verfahren zur geophysikalischen Prospektion nach einem der Ansprüche 18 bis 22, dadurch gekennzeichnet, dass die schliessliche bildliche Darstellung für den Geophysiker bestimmt ist, wenigstens einen Zahlenwert aus jeder numerischen Restdarstellung enthält.

24. Verfahren zur geophysikalischen Prospektion nach einem der Ansprüche 1 bis 23, dadurch gekennzeichnet, dass die Darstellung in Form einer Karte ist, welche einen Zahlenwert, der einem bestimmten Augenblick entspricht, illustriert, und zwar für eine Mehrzahl von Prospektionsstationen, die über ein zweidimensionales Gebiet verteilt sind (Fig. 20).

25. Verfahren zur geophysikalischen Prospektion nach einem der Ansprüche 1 bis 23, dadurch gekennzeichnet, dass die Darstellung einen zeitlichen Querschnitt darstellt und für eine Mehrzahl von in einer Reihe ausgerichteten Stationen die zeitliche Veränderung des dargestellten Parameters wiedergibt (Fig. 19).

26. Verfahren zur geophysikalischen Prospektion nach einem der Ansprüche 1 bis 25, dadurch gekennzeichnet, dass die Darstellung eine graphische Illustration in Form von Punkten veränderlicher Dichte umfasst (Fig. 19).

27. Verfahren zur geophysikalischen Prospektion nach einem der Ansprüche 1 bis 26, dadurch gekennzeichnet, dass die Datenverarbeitung anschliessend folgende Schritte umfasst:
für jede lokale, also einer bestimmten Prospektionsstation zugeordnete Übergangsfunktion, die auf diese Weise festgestellt worden ist, wird eine lokale Anzeigefunktion (IL, Fig. 23) bestimmt, die mit der Veränderung der Steigung der Übergangsfunktion als Funktion der Zeit verknüpft ist;
für mehrere Prospektionsstationen wird eine regionale Anzeigefunktion (IR, Fig. 23) bestimmt, die als Funktion der Zeit das Gemeinsame an den lokalen Anzeigefunktionen, die den einzelnen Stationen zugeordnet sind, darstellt;
für jede der betroffenen Stationen wird eine Restanzeige (IL–IR, Fig. 24) bestimmt, in dem die regionale Anzeigefunktion von jeder der lokalen Anzeigefunktionen abgezogen wird;
und diese Restanzeigen werden dargestellt als Funktion der geographischen Position der betroffenen Stationen, was eine Darstellung von gewissen Zügen der Struktur des Untergrundes ergibt.

28. Verfahren zur geophysikalischen Prospektion nach Anspruch 27, dadurch gekennzeichnet, dass nach der Vorbehandlung, welche die statistische Zusammenstellung in roher, numerischer Darstellung des Übergangsphänomens wiederholt registrierter Empfangssignale für jede Station, dann eine numerische Glättungsfilterung zur Erzielung einer numerisch geglätteten Darstellung des Übergangsphänomens umfasst, und von den vorhin zitierten Verarbeitungsschritten eine Normalisierung der geglätteten Darstellung (RNL, Fig. 21) durchgeführt wird, indem man davon eine theoretische Kurve abzieht (CT, Fig. 21), die dem elektromagnetischen Übergangsfeld entspricht, welche der ausgesandte Strom bei einem vereinfachten Untergrund erzeugen würde, wodurch eine geglättete und normalisierte numerische Darstellung erzeugt wird (RNLM, Fig. 22).

29. Verfahren zur geophysikalischen Prospektion nach einem der Ansprüche 27 und 28, dadurch gekennzeichnet, dass die Bestimmung der lokalen Anzeigefunktionen die Berechnung der zeitlichen Ableitung jede der Übergangsfunktionen umfasst.

30. Verfahren zur geophysikalischen Prospektion nach einem der Ansprüche 27 bis 29, dadurch gekennzeichnet, dass die Bestimmung der lokalen Anzeigefunktionen die Bestimmung des Verhältnisses zwischen dem Anstieg der Übergangsfunktion und der Amplitude dieser Übergangsfunktion umfasst.

31. Verfahren zur geophysikalischen Prospektion nach einem der Ansprüche 27 bis 30, dadurch gekennzeichnet, dass die Bestimmung der örtlichen Anzeigefunktionen die Berechnung der log-arithmischen Ableitung jeder der Übergangsfunk-tionen umfasst.

32. Verfahren zur geophysikalischen Prospektion nach einem der Ansprüche 27 bis 31, dadurch gekennzeichnet, dass die regionale Anzeigefunktion in Form einer Exponentialfunktion bestimmt wird.

33. Verfahren zur geophysikalischen Prospektion nach einem der Ansprüche 27 bis 32, dadurch gekennzeichnet, dass die regionale Anzeigefunktion angeglichen wird an eine Exponentialfunktion, deren Argument ein von der Zeit abhängiges Polynom zweiten Grades ist.

34. Verfahren zur geophysikalischen Prospektion nach einem der Ansprüche 27 bis 33, dadurch gekennzeichnet, dass die schliessliche Darstellung in Form eines Bildes, das als Zeitquerschnitt gezeichnet wird, in einem Zeitmassstab dargestellt wird, der als Quadratwurzel der Zeitkoordinate des Übergangsphänomens ausgedrückt ist.

35. Verfahren zur geophysikalischen Prospektion nach einem der Ansprüche 27 bis 34, bei welchem die lokalen Anzeigefunktionen vom Typ des Verhältnisses Steigung zur Amplitude der Übergangsfunktion sind, dadurch gekennzeichnet, dass die schliessliche Darstellung sich auf den Klärwert dieses Verhältnisses bezieht.

36. Verfahren zur geophysikalischen Prospektion nach einem der Ansprüche 27 bis 34, dadurch gekennzeichnet, dass die Steigung der Übergangsfunktion in einem gegebenen Punkt bestimmt wird, in dem eine Exponentialkurve gesucht wird, die möglichst gut durch diesen Punkt passiert und beiderseits davon durch n benachbarte Punkte, wobei vorzugsweise n kleiner oder gleich 5 ist.

FIG_1

FIG_2

FIG_3

FIG_4

FIG_5

FIG_6

FIG_7

I

+ $I_0$

ENVOI

COURANT D'EXCITATION

REPOS

$t_0$

TEMPS

## FIG. 8A

ΔV

Vcc

SIGNAL DÉTECTÉ

Δt

$t_0$

TEMPS

SIGNAL
TRANSITOIRE
ANALYSÉ

## FIG. 8B

I

+ $I_0$

ENVOI

COURANT D'EXCITATION

REPOS

$t_0$

TEMPS

## FIG. 9A

ΔV

SIGNAL DÉTECTÉ

Δt

$t_0$

TEMPS

SIGNAL
TRANSITOIRE
ANALYSÉ

## FIG. 9B

## FIG. 10A

Δt

COURANT
D'EXCITATION

Δt    Δt    Δt

+
$I_0$

+
$I_0$

I

(1 cycle)

$\bar{I_0}$

$\bar{I_0}$

t

ACCUMULATION
200 à 300
CYCLES +/−

SIGNAL
DÉTECTÉ

ΔV

$V_1^+$

+

Δt

$t_1$

+

$t_1$

−

$V_1^-$

Δt

Δt

t

SIGNAL REÇU
AVEC BRUITS
TELLURIQUES
ET INDUSTRIELS

+

−

## FIG. 10B

FIG_11

FIG_12

FIG_13

FIG_14

FIG_15

FIG_16

FIG_17

# FIG_18

SECTION TEMPS
RESIDUELLE EN %
PROFIL B

| TEMPS (S) | 6 | 5 | 4 | 3 | 2 | 1 |
|---|---|---|---|---|---|---|
| 0.0 | | | | | | |
| | -5.54 | -11.1 | -6.24 | 0.231 | -52.0 | 16.8 |
| | -3.44 | -10.3 | -4.34 | 10.1 | -21.9 | 11.7 |
| 1.0 | -3.16 | -6.57 | -5.02 | -4.61 | -18.4 | 12.6 |
| | -1.53 | -0.471 | -1.07 | -4.63 | -6.81 | 12.6 |
| 1.5 | -2.26 | 2.02 | -1.10 | -9.29 | 3.25 | -3.89 |
| | -1.39 | 6.20 | 1.12 | -5.79 | 13.7 | 0.708 |
| | 3.66 | 8.61 | 4.06 | 3.60 | 17.2 | 5.51 |
| 2.0 | 4.86 | 6.93 | 2.17 | -4.00 | 15.8 | -11.4 |
| | 4.16 | 10.0 | 3.34 | -1.13 | 14.9 | -6.32 |
| 2.5 | 3.42 | 6.76 | 3.40 | 0.961 | 17.3 | -9.35 |
| | 0.922 | 0.939 | 2.21 | -2.16 | 12.1 | -22.7 |
| | 2.43 | -0.624 | 1.05 | 9.85 | 16.6 | -16.2 |
| 3.0 | 2.55 | -0.338 | 3.62 | 8.53 | 16.8 | -21.8 |
| | 0.484 | -1.35 | 1.42 | 9.19 | 21.7 | -10.1 |
| 3.5 | -0.667 | 1.60 | 3.25 | -15.5 | 29.4 | -17.5 |
| | -0.072 | 4.32 | 1.42 | -0.015 | 28.0 | -13.0 |

0 024 961

SECTION TEMPS
Résiduelle en %

(DENSITE VARIABLE)

Profil B

FIG. 19

## CARTE DES VALEURS RESIDUELLES
### Fenêtre 3,25s (2,80-3,64)

## FIG. 20

FIG_21

FIG_22

$$\frac{-y'}{y}$$

IL

IR

Temps

FIG_23

Résidus=
IL-IR

Temps

FIG_24